# EUROPÄISCHE PATENTSCHRIFT

(11) **EP 1 200 324 B1**
(45) Veröffentlichungstag und Bekanntmachung des Hinweises auf die Patenterteilung: **12.03.2003**
(21) Anmeldenummer: 00956182.0
(22) Anmeldetag: 13.07.2000
(51) Int. Cl.: B65F 1/16, B65F 1/02, F16J 13/20, B65D 77/04, B65D 77/06

(54) **SAMMEL-, TRANSPORT- UND LAGERBEHÄLTER**
COLLECTING, TRANSPORTING AND STORING CONTAINER
CONTENEUR DE COLLECTE, DE TRANSPORT ET DE STOCKAGE

(30) Priorität: 03.08.1999 DE 29913537 U; 31.01.2000 DE 10004116
(43) Veröffentlichungstag der Anmeldung: 02.05.2002
(73) Patentinhaber: Wunsch, Claus, 64625 Bensheim (DE)
(72) Erfinder: Wunsch, Claus, 64625 Bensheim (DE)
(74) Vertreter: Helber, Friedrich G., Dipl.-Ing.
(86) Internationale Anmeldenummer: EP0006703
(87) Internationale Veröffentlichungsnummer: WO01009010

(56) Entgegenhaltungen:
- EP-A- 0 628 488
- FR-A- 1 295 675
- US-A- 4 279 356
- US-A- 5 083 509

## Beschreibung

Die Erfindung betrifft einen Behälter für flüssige und/oder feste Stoffe mit einem im Boden- und Umfangswandungs-Bereich durch einen in einen Außenbehälter eingesetzten, vom Boden zur Einfüllöffnung durchgehend zylindrischen Innenbehälter doppelwandig ausgebildeten Behälterkörper, der an seiner Oberseite eine in der Draufsicht kreisförmig begrenzte Einfüllöffnung aufweist, welche durch einen mit einer Ringdichtung versehenen verschwenkbaren Deckel hermetisch verschließbar ist, welcher zumindest in einem im Schließzustand behälterseitigen Teilbereich derart kreisförmig begrenzt ist, dass er passend in den Innenbehälter einschwenkbar und mit Verriegelungsmitteln versehen ist, die wahlweise von einer aus am Behälterkörper vorgesehenen Verriegelungsaufnahmen zurückgezogenen, in eine formschlüssig in die Verriegelungsaufnahmen eingreifende Stellung betätigbar sind, wobei die Ringdichtung in dem in der Deckel-Schließstellung innerhalb der Einfüllöffnung liegenden Teilbereich des Deckels angeordnet und als geschlossener Dichtring aus elastomerem Material ausgebildet ist, dessen Außendurchmesser in unverformtem Zustand im Wesentlichen gleich bzw. nur geringfügig kleiner als der lichte Innendurchmesser des Innenbehälters und dessen Innendurchmesser im Wesentlichen gleich bzw. nur geringfügig größer als der Außendurchmesser des Deckels in dem den Dichtring in seiner bestimmungsgemäßen Montagestellung auf dem Deckel haltenden Bereich ist

Behälter, die z.B. für den Transport von Abfallstoffen oder von umweltgefährdenden Stoffen, wie Chemikalien, Ölen u.dgl. Flüssigkeiten verwendbar sind und die deshalb dichtschließend und widerstandsfähig gegen Krafteinwirktung von außen sein müssen, sind bekannt (z.B. DE 41 10 847 C2, DE 43 21 199 C2), wobei der eigentliche Behälterkörper dann noch in einem aus ihn umschließenden Profilen gebildeten Rahmenwerk gehalten ist, welches im Bodenbereich Gabelführungen für die Aufnahme eine Staplergabel und im oberen Bereich jeweils Stapelecken aufweist, welche das Aufeinanderstapeln mehrerer Behälter erlaubt. Die bekannten Behälter haben sich für spezielle Einsatzfälle durchaus bewährt. Aufgrund der Tatsache, daß sie eine gegenüber dem Innendurchmesser des Behälterkörpers im Durchmesser deutlich verkleinerte Einfüllöffnung haben, ist aber ihre Entleerung - z.B. bei Befüllung mit rieselfähigem oder stückigem festem Füllgut kritisch - insbesondere wenn dieses zum Kleben oder Verhärten neigt. Auch die Reinigung des geleerten Behälters durch die verengte Öffnung hindurch ist aufwendig und insbesondere im Bereich der Behälter-Deckelfläche in den an die Einfüllöffnung anschließenden Bereichen auch nur schwierig kontrollierbar.

Aus der US-A- 5 083 509 ist ein Behälter bekannt, der einen durchgehenden zylindrischen Innenbehälter ohne verjüngte Mündung aufweist, der jedoch nicht als Transport- und Lagerbehälter, sondern ausschließlich als Müllbehälter für feste Stoffe bestimmt ist und Kompaktiermittel aufweist, mittels derer der eingebrachte Müll paketartig verdichtet werden kann. Zu diesem Zweck ist der Behälter mit einem verschieblich im Innenbehälter angeordneten Verdichtungskolben versehen, der durch Evakuierung des den zu verdichtenden Müll enthaltenden Raums einen Verdichtungshub in Richtung zur verschlossenen Behältermündung ausführt. Nach Öffnen des Behälterverschlusses ist das verdichtete Müllpaket dann aus dem Behälter ausbringbar. Die zur Evakuierung des Behälters erforderlichen Hilfsaggregate, wie die motorgetriebene Saugpumpe. Ventile etc. sind dabei unterhalb des Bodens des Innenbehälters innerhalb eines vom verlängerten Außenbehälter gebildeten Einbauraums angeordnet.

Demgegenüber liegt der Erfindung die Aufgabe zugrunde, einen als Sammel-, Transport- und Lagerbehälter für alle vorkommenden flüssigen, pastösen und rieselfähigen oder stückigen festen Füllgütern geeigneten Behälter zu schaffen, der so ausgelegt ist, daß er grundsätzlich für alle Gefahrenklassen, d. h. auch für Gefahrengüter zulassungsfähig und geeignet ist.

Ausgehend von einem Behälter der eingangs erwähnten Art wird diese Aufgabe erfindungsgemäß dadurch gelöst, daß daß der Deckel in seinem behälterinnenseitigen Endbereich einen umlaufenden, radial vortretenden Flansch aufweist, an den sich in Richtung aus dem Behälterinnern heraus eine zylindrische Umfangswandung anschließt, auf welcher zunächst der Dichtring und dann ein geschlossener zylindrischer Spannring in Behälter-Längsrichtung verschieblich angeordnet sind, und daß der Spannring die behälterinnenseitige Stirnwand des Deckels in Richtung aus dem Behälterinnern heraus überragt und an dem über die Deckel-Stirnwand vortretenden Bereich des Spannrings Zustellmittel zur wahlweisen Verschiebung des Spannrings in Richtung ins Behälterinnere bzw. aus dem Behälterinnern heraus angreifen. Durch die einfüllseitige Ausbildung des Behälters derart, daß der Behälterkörper praktisch keine gesonderte Einfüllöffnung mehr aufweist, sondern an der Oberseite offen ist und der in der Schließstellung teilweise in den offenen Behälter passend eingreifende Deckel also in geöffnetem Zustand freien Zugang zum Behälterinnen gewährt, ist sowohl die vollständige Entleerung des Behälters, die Überprüfung desselben sowie die - gegebenenfalls erforderliche - sorgfältige Reinigung desselben ohne Schwierigkeiten möglich. Insbesondere können auch automatische Reinigungseinrichtungen entwickelt werden, bei denen zusätzlich zu einer Reinigung mit Hochdruckstrahlen von Reinigungsflüssigkeit mit umlaufenden Bürsten gearbeitet werden kann, deren Einsatz nicht durch eine verengte Einfüllöffnung behindert oder erschwert wird. Durch Betätigung der Zustellmittel derart, daß der Spannring in Richtung ins Behälterinnere verschoben wird, wird er am Dichtring zur Anlage gebracht und verformt ihn dann elastisch derart, daß er sich sowohl an der Innenfläche des Innenbehälters als auch an der zylindrischen Umfangswandung des Deckels unter Vorspannung anlegt. Die im Behälterinnern auftretende Drucksteigerung, die beispielsweise auf bei Erwärmung aus dem Füllgut austretende gasförmige Bestandteile zurückzuführen sein können, verformen den Dichtring zusätzlich und erhöhen so dessen Anpreßkraft an die Behälter-Innenwand bzw. die zylindrische Umfangswandung des Deckels.

In vorteilhafter Weiterbildung der Erfindung kann der Außenbehälter eine in der Draufsicht polygonale, vorzugsweise achteckige Form haben, wobei der zylindrische Innenbehälter in konzentrischer Ausrichtung zum Außenbehälter angeordnet und sein Außendurchmesser zumindest geringfügig kleiner als der zwischen den Innenflächen des Außenbehälters gemessene lichte Abstand ist. Der Behälterkörper ist also doppelwandig ausgebildet, wobei die polygonale Form des Außenbehälters durch die zwischen den jeweiligen Teilflächen des Polygons gebildeten Biegekanten gegenüber einem zylindrischen Außenbehälter sickenartig verstärkt ist.

In einer vorteilhaften Weiterbildung der Erfindung weist der Außenbehälter eine im wesentlichen quadratische Bodenplatte auf, deren diametral gegenüberliegende Begrenzungskante im wesentlichen bündig mit der Außenseite der zugeordneten gegenüberliegenen Teilflächen des Außenbehälters ausgerichtet sind.

In den dann über die Außenflächen des Außenbehälters vortretenden Eckbereichen der Bodenplatte wird zweckmäßig jeweils ein sich in senkrechter Richtung bis über die Einfüllöffnung erstreckendes metallisches Eckprofil vorgesehen, welche Teil eines den Behälterkörper umschließende Rahmenwerks sind.

Die Zustellmittel für die Verschiebung des Spannrings werden zweckmäßig von über den Umfang des auf der behälterabgewandten Oberseite der Deckel-Stirnwand in Umfangsrichtung verteilt angeordneten, im wesentlichen radial verschieblich geführten und in jeweils zugeordnete Öffnungen im Spannring vorschieb- und zurückziehbare Riegelelemente gebildet, die mit jeweils einer sich von innen nach außen verjüngenden Begrenzungsfläche in die jeweils zugeordnete Öffnung im Spannring eingreifen. Die Zustellung des Spannrings erfolgt also durch die keilartig wirkenden sich verjüngenden Begrenzungsflächen.

Die Riegelelemente können dann mit Vorteil radial über die in die jeweilige Öffnung im Spannring eingreifende verjüngende Begrenzungsfläche nach außen verlängert sein, wobei im wesentlichen fluchtend zu den Öffnungen im Spannring vom Behälterkörper nach oben vortretende Laschen mit Öffnungen als Riegelaufnahmen für die Riegelelement-Verlängerungen vorgesehen sind. Zusätzlich zu der in der Schließstellurig kraftschlüssigen Halterung des Deckels im Behälterinnern über die verformte Ringdichtung wird hier also eine mechanische Verriegelung durch die Riegel-Verlängerungen erzielt, die bei geeigneter Ausgestaltung auch dann noch wirksam ist, wenn der Dichtring durch Zurückziehen der Riegelelemente teilweise oder vollständig entspannt ist. Damit wird eine Sicherung gegen plötzliches Öffnen des Deckels aufgrund von im Behälterinnern entstandenem Überdruck geschaffen.

An den freien äußeren Enden der Riegel-Verlängerungen ist in vorteilhafter Weiterbildung jeweils ein gegenüber der Riegel-Verlängerung im Durchmesser vergrößerter Kopf vorgesehen, dessen Durchmesser jeweils kleiner als der Durchmesser der als Riegelaufnahme vorgesehenen zugeordneten Öffnung in den nach oben vortretenden Laschen ist.

Der am freien Ende jeder Riegelelement-Verlängerun vorgesehene Kopf weist dann zweckmäßig eine sich radial nach außen kegelstumpfförmig verjüngende Begrenzungsfläche auf, welche den Kopf beim Riegelvorgang in den als Riegelaufnahme vorgesehenen zugeordneten Öffnung führt.

Die Riegelelemente ihrerseits können über jeweils einen langgestreckten Schaftabschnitt an jeweils einem zugeordneten, um die Behälter-Mittelachse drehbaren Hebelarm angeschlossen sein, wobei die Hebelarme für die Betätigung der Riegelemente dann zweckmäßig an einer gemeinsamen, um die Behälter-Mittelachse drehbaren Betätigungselement angeordnet sind, an dessen oberem, vom Deckel vortretenden Ende eine von Hand betätigbare hebelartige Handhabe vorgesehen ist. Anstelle von einzelnen, jeweils vom drehbaren Betätigungselement radial vortretenden Hebelarmen können diese Hebelarme auch Teil einer gemeinsamen, das Betätigungselement radial überragenden Betätigungsplatte sein, in deren Umfangsbereich die Betätigungsstange jeweils in Umfangsrichtung zueinander versetzt angelenkt sind.

Aufgrund der speziellen äußeren Form des Behälters empfiehlt sich eine Ausgestaltung, bei welcher auf der Oberseite der Deckel-Stirnwand insgesamt vier jeweils um etwa 90° in Umfangsrichtung zueiander versetzte Riegelelemente vorgesehen sind, wobei die mit den als Riegelaufnahmen dienenden Öffnungen versehenen Laschen jeweils in senkrechter Richtung oberhalb der vortretenden Eckbereiche der Bodenplatte vom oberen Rand des Behälterkörpers vortretend angeordnet sind.

Die Abmessungen und die Lage der an den Riegelelementen vorgesehenen, in zugeordneten Öffnungen im Spannring eingreifenden, sich nach außen verjüngenden Begrenzungsflächen und die Riegelelement-Verlängerungen sowie die wirksame Länge der um die Behälter-Mittelachse drehbaren Hebelarme sind in vorteilhafter Weiterbildung der Erfindung so aufeinander abgestimmt, daß bei einer Drehbetätigung der Handhabe aus der Schließstellung des Deckels über einen ersten Teilbetätigungsweg der Spannring um ein solches Maß in senkrechter Richtung freigegeben wird, daß der in der Deckel-Schließstellung vom Spannring in dichtende Anlage an den Innenbehälter verformte Dichtring sich elastisch in seine Ausgangsform zurückverformt, wobei die Riegelelement-Verlängerungen noch durch die als Riegelaufnahmen dienenden Öffnungen in den Laschen hindurchgreifen und erst bei weiterer Drehbetätigung über den restlichen Betätigungsweg aus den Öffnungen in den Laschen zurückgezogen werden. Dadurch wird gewährleistet, daß der Dichtring bereits völlig entspannt ist und so ein Druckabbau im Behälterinnern möglich ist, während der Deckel selbst durch die Riegelelement-Verlängerung noch mechanisch gegen Öffnen gesichert ist.

Bei einer derartigen Ausgestaltung ist es von Vorteil, wenn eine zwischen der hebelartigen Handhabe und dem Deckel wirksame, von Hand außer Wirkung setzbare Anschlageinrichtung vorgesehen ist, welche bei einer Betätigung der hebelartigen Handhabe aus der Schließstellung nach einer Drehung um den ersten Teilbetätigungsweg wirksam wird. Dadurch wird ausgeschlossen; daß die hebelartige Handhabe in einem Zug so schnell geöffnet werden kann, daß die Entspannung des Dichtrings sowie die mechanische Entriegelung des Dekkels mittels der Riegelelement-Verlängerung praktisch gleichzeitig erfolgt und so der Deckel dann durch im Behälter entstandenen Innendruck doch aufspringen und die Bedienungsperson gefährden kann. Die Anschlageinrichtung weist dabei mit Vorteil einen der hebelartigen Handhabe zugeordneten, zur Deckeloberseite vortretenden Anschlag einerseits und einen vom Deckel nach oben vortretenden, im Betätigungsweg des Anschlags angeordneten Gegenanschlag auf, wobei der der hebelartigen Handhabe zugeordnete Anschlag aus seiner am Gegenanschlag zur Anlage kommenden Anschlagstellung von Hand heraus beweglich ausgebildet ist.

Zweckmäßig ist der Anschlag dabei federnd in die Anschlagstellung am Gegenanschlag vorgespannt und ist durch ein der hebelartigen Handhabe zugeordnetes Entriegelungselement ohne Umgreifen entgegen der Federvorspannung aus der Anschlagstellung herausstellbar.

Der Deckel ist vorzugsweise verschwenkbar am oberen Rand des Behälterkörpers angelenkt, und zwar in erfindungsgemäßer Weiterbildung über mehr als 90° verschwenkbar.

Dabei ist dann eine Ausgestaltung zweckmäßig, bei welcher der Deckel durch eine von Hand betätigbare Deckel-Feststelleinrichtung in einer Zwischenstellung im Bereich zwischen etwa 90° und 120° fixierbar ist.

In bevorzugter Ausgestaltung der Erfindung ist der Deckel über einen Gelenkmechanismus am Behälterkörper angelenkt, welcher den Deckel bei der beginnenden Öffnungsbewegung zunächst mit einer im wesentlichen aus dem Innenbehälter herausgerichteten Bewegungskomponente führt und erst nach Austritt des Deckels aus der Mündung des Innenbehälters in die Schwenkbewegung übergeht. Gelenkmechanismen mit solcher Kinematik sind beispielsweise von den heute im Möbelbau eingesetzten Gelenkscharnieren bekannt. Als Gelenkmechanismus kommt hier also beispielsweise ein sogenannter Viergelenkmechanismus grundsätzlich in Frage, wobei diese in seiner Kinematik zweckmäßig so ausgebildet ist, daß der in die Zwischenstellung verschwenkte und fixierte Deckel in der Draufsicht seitlich versetzt dem Behälterkörper steht und so das Behälterinnere für das Einführen von Einfüll- oder Absaugorgan oder auch von Reinigungsgeräten von der Oberseite aus zugänglich ist.

Da der Deckel des erfindungsgemäßen Behälters durch seinen im Vergleich zu bekannten Behälter relativ großen Druchmesser und den komplexen Spannund Verriegelungsmechanismus ein vergleichsweise hohes Gewicht haben kann, empfiehlt es sich, am Gelenkmechanismus eine Feder-Vorspanneinrichtung angreifen zu lassen, die zumindest während des ersten Teils der Öffnungsbewegung des Deckels aus seiner Schließstellung eine in Öffnungsrichtung geöffnete Kraft erzeugt, welche das in Schließrichtung wirkende Gewicht des Deckels zumindest teilweise ausgleicht.

Der erfindungsgemäße Behälter wird zweckmäßig weitgehend zumindest aber seine mit dem Behälter-Füllgut in Kontakt kommenden Teile aus einer korrosionsbeständigen und gegen das Füllgut chemisch resistenten Metallegierung hergestellt.

Die Erfindung ist in der folgenden Beschreibung eines Ausführungsbeispiels in Verbindung mit der Zeichnung näher erläutert, und zwar zeigt bzw. zeigen:
- Fig. 1 bis 3: eine Vorderansicht, eine Seitenansicht und eine Rückansicht des erfindungsgemäßen Behälters;
- Fig. 4: eine Schnittansicht durch den Behälterkörper ohne Deckel in der in Fig. 1 durch die Pfeile 4-4 veranschaulichten Schnittebene;
- Fig. 5: eine Draufsicht auf den Behälter, gesehen in Richtung des Pfeils 5 in Fig. 2;
- Fig. 5a: eine vergrößerte Darstellung des in Fig. 5 strichpunktiert umgrenzten Bereichs 5a des Behälters in vergrößertem Maßstab;
- Fig. 6, 7 und 8: Seitenansichten des Behälters entsprechend der Fig. 2, wobei jedoch verschiedene Stellungen des Deckels beim Öffnungsvorgang veranschaulicht sind;
- Fig. 6a,7a und 8a: jeweils den in den Fig. 6, 7, 8 strichpunktiert umgrenzten Bereich des Behälters in vergrößertem Maßstab;
- Fig. 9: eine Schnittansicht des Deckels sowie des oberen Endes des Behälterkörpers des erfindungsgemäßen Behälters bei nicht gespanntem Deckelverschluß;
- Fig. 9a: ein vergrößerter Ausschnitt des in Fig. 9 innerhalb des strichpunktiert umgrenzten Bereichs 9a gelegenen Teils des Deckels sowie des oberen Randbereichs des Behälterkörpers;
- Fig. 9b: eine der Fig. 9a entsprechende Schnittansicht, in welcher der Deckelverschluß in gespannter, den Behälterkörper dicht verschließender Stellung gezeigt ist;
- Fig. 9c: eine den Fig. 9a und 9b entsprechende Schnittansicht des Deckels, in welcher aufgrund von im Behälter herrschendem Innendruck das Öffnen des Behälters verhindernde Sicherheitseinrichtungen wirksam sind;
- Fig. 10a, 10b: jeweils vergrößerte Teilansichten der in den Fig. 9a bzw. 9b strichpunktiert umgrenzten Bereich des Dekkels sowie des oberen Randbereichs des Behälterkörpers;
- Fig. 11a, 11b und 11c: jeweils eine Draufsicht auf den Deckel des erfindungsgemäßen Behälters mit abgenommener Deckel-Außenwand, welche unterschiedliche Verriegelungsstellungen der Verriegelungs- und Spannorgane des Deckelverschlusses veranschaulichen;
- Fig. 12a: eine der Fig. 11b entsprechende Draufsicht auf den Deckel mit zusätzlich dargestelltem Sprühorgan für eine Deckel-Innenreinigung durch eine unter Druck zugeführte Reinigungsflüssigkeit;
- Fig. 12b: eine Schnittansicht durch die in Fig. 12a rechts gelegene Hälfte des Deckels mit Darstellung des Sprühorgans; und
- Fig. 12c: eine Draufsicht auf den Deckel ohne Außenverkleidung und Griff in geschlossenem Zustand eines das Öffnen des Deckels verhindernden Verriegelungselements.

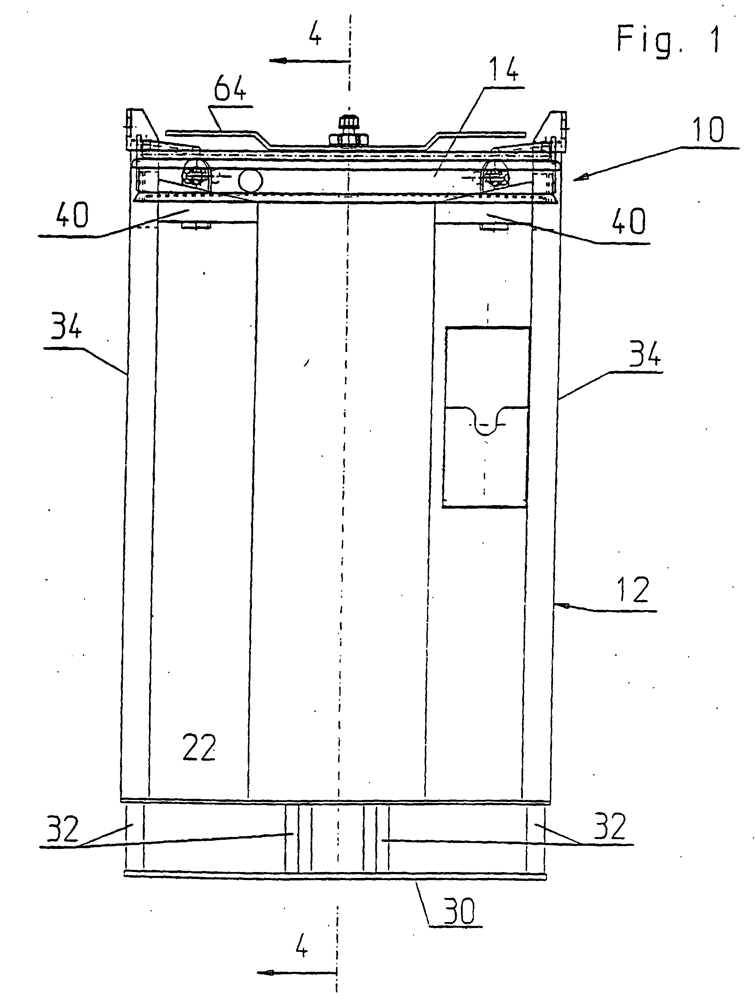

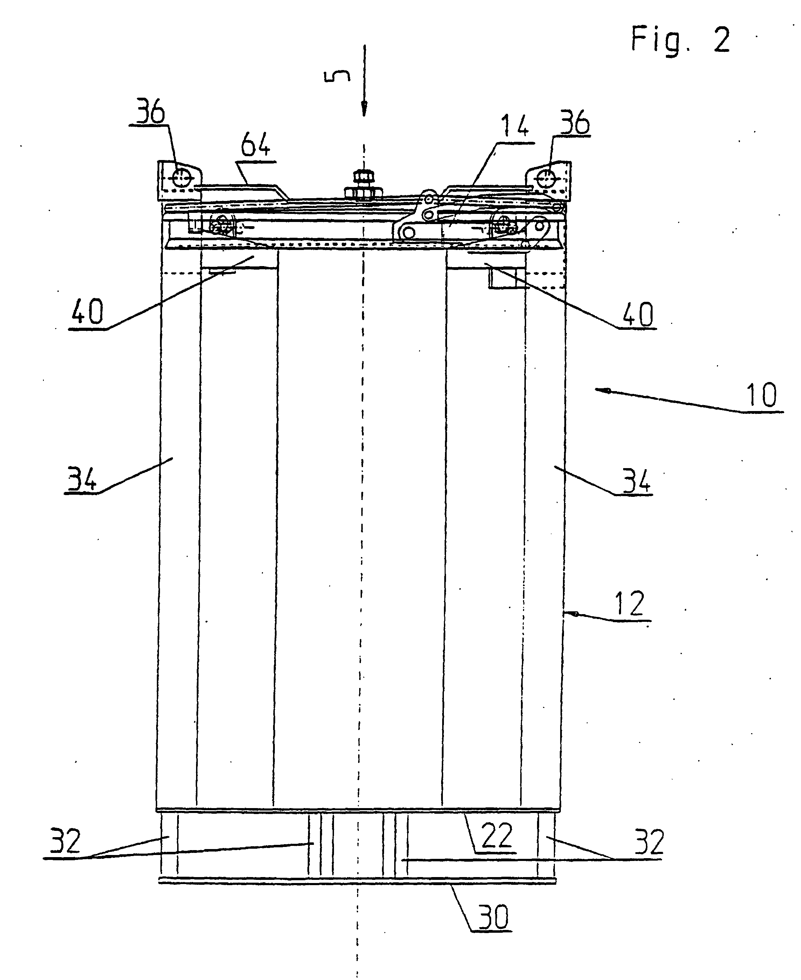

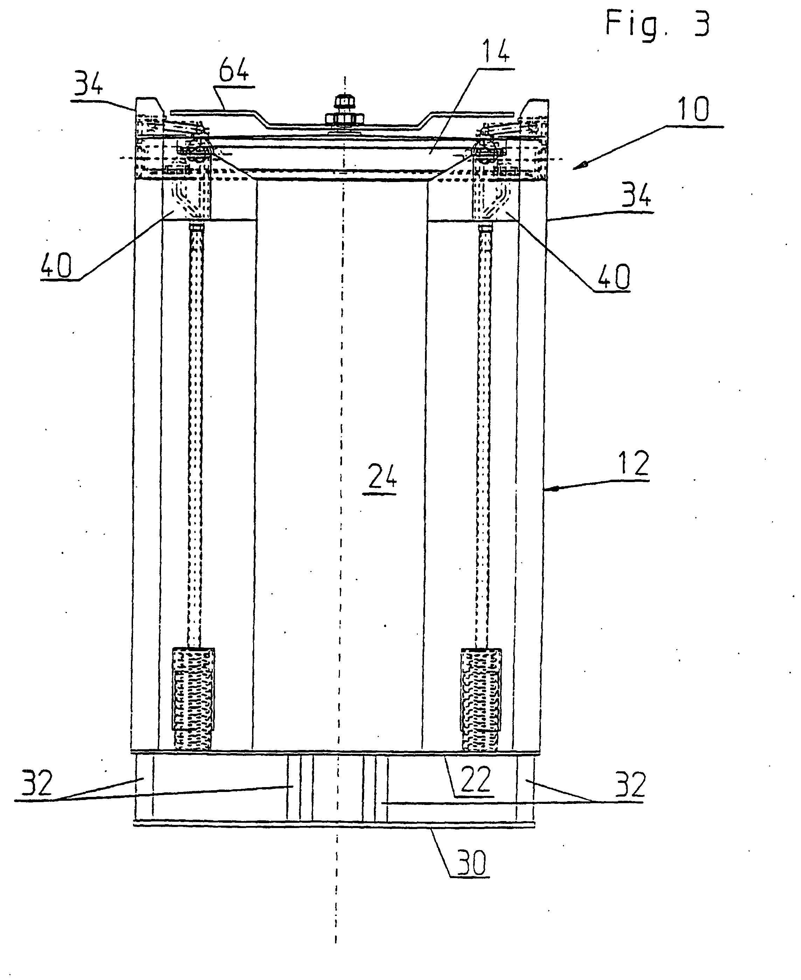

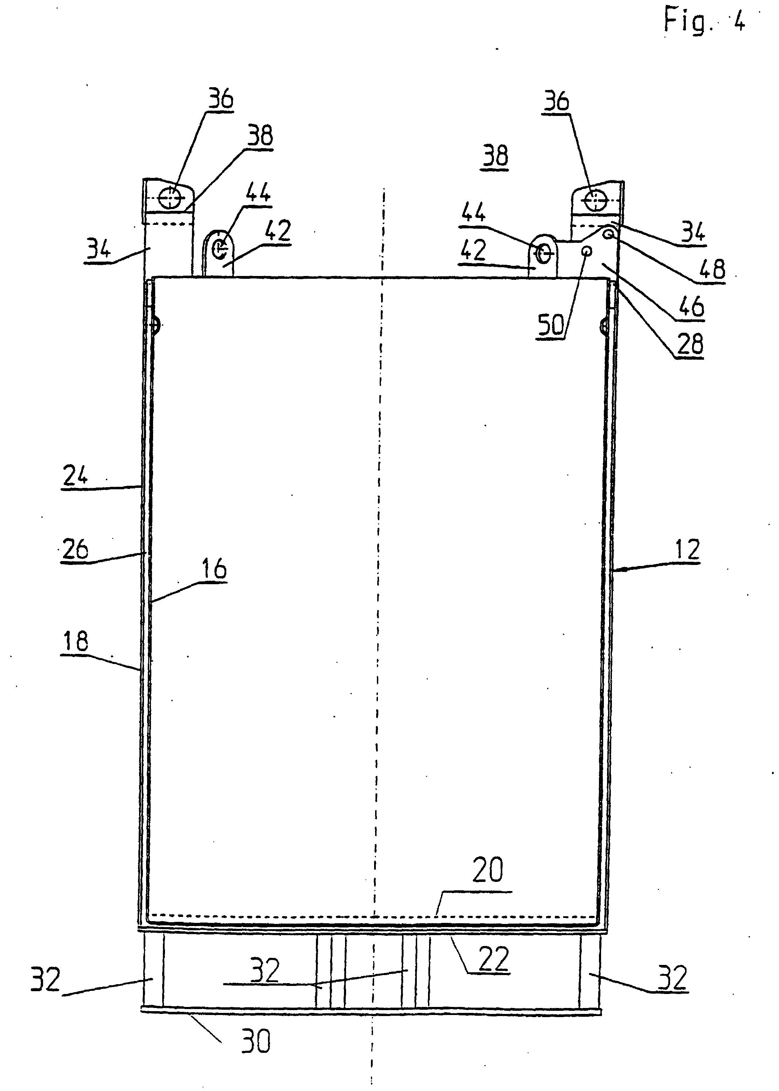

Der in den Fig. 1 bis 3 und 5 dargestellte, in seiner Gesamtheit mit 10 bezeichnete erfindungsgemäße Behälter setzt sich in seinen Grundbestandteilen aus dem Behälterkörper 12 (Fig. 4) und einem verschwenkbar am Behälterkörper angelenkten Deckel 14 zusammen.

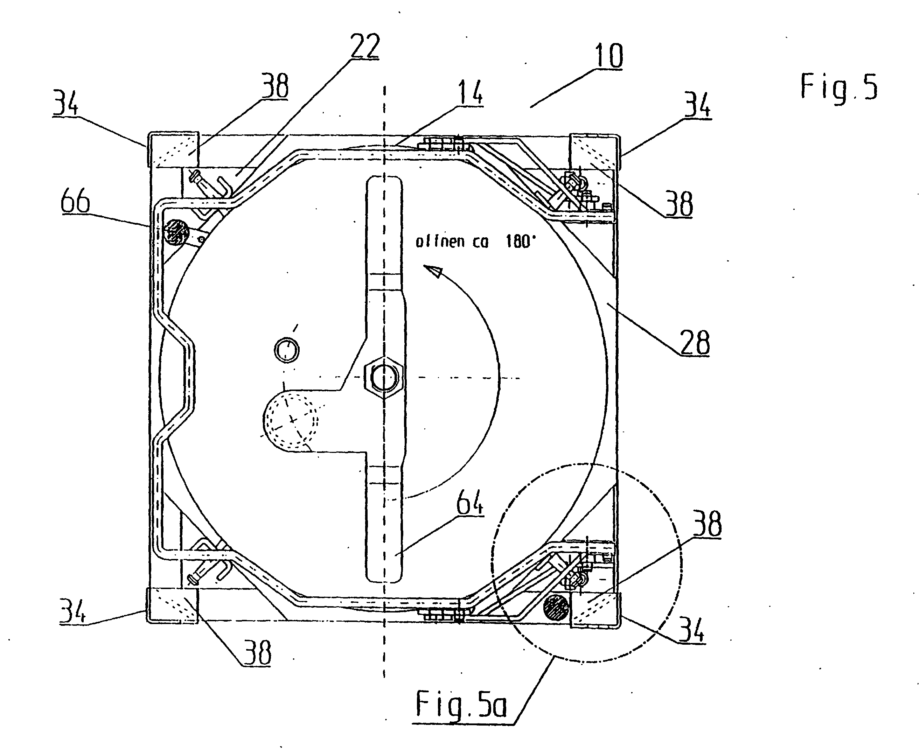

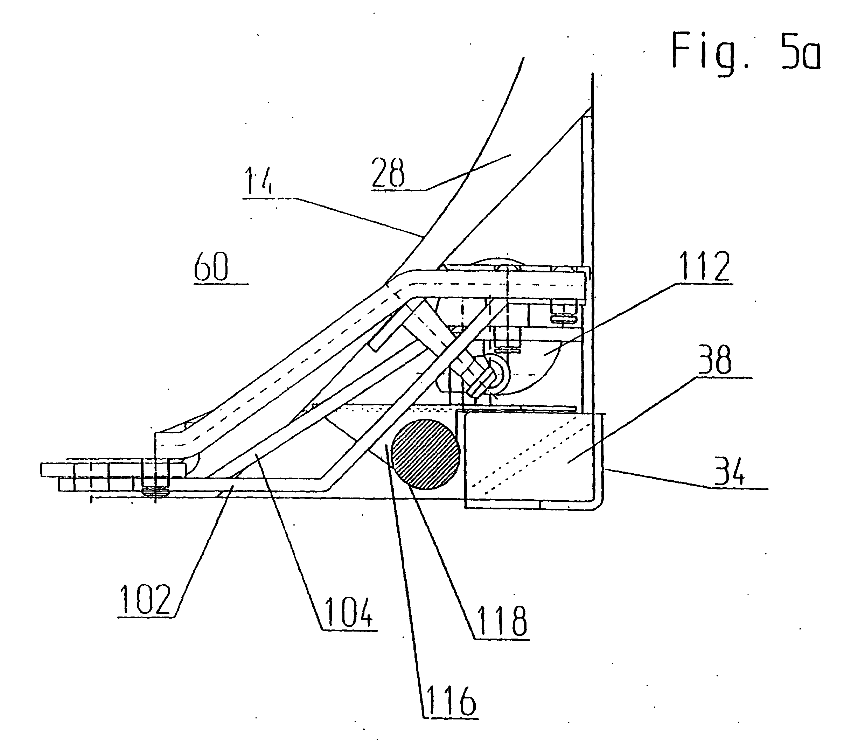

Der eigentliche zur Aufnahme des Füllguts bestimmte Teil des Behälterkörpers ist doppelwandig ausgebildet und setzt sich aus einem zylindrischen Innenbehälter 16 und einem diesen mit Abstand umgebenden Außenbehälter 18 zusammen. Der Innenbehälter ist an seiner Oberseite offen und bodenseitig durch eine Bodenwand 20 geschlossen. Der Außenbehälter 18 ist auf einer ebenflächige, im speziellen Fall quadratische Bodenplatte 22 aufgesetzt, wobei seine senkrechte Außenwand 24 in der Draufsicht (Fig. 5) derart achteckig begrenzt ist, daß die jeweils zwischen den Eckpunkten liegenden, parallel zur Bodenplatte 22 verlaufenden Außenwandbereiche bündig in die Begrenzungen der Bodenplatte übergeht. In den Eckbereichen tritt dann jeweils ein in der Draufsicht dreieckiger Abschnitt der Bodenplatte 22 über die Außenwand 24 des Außenbehälters vor. Die Außenwandung 24 ist am unteren Ende auf der Bodenplatte 22 verschweißt, ebenso wie die zylindrische Umfangswandung des Innenbehälters 16 mit der Bodenwand 20 verschweißt ist. In Fig. 4 ist erkennbar, daß der Außendurchmesser des Innenbehälters kleiner als das lichte Innenmaß des Außenbehälters bemessen ist, so daß also zwischen dem Innenbehälter 16 und dem Außenbehälter 18 ein umlaufender Zwischenraum 26 besteht. Der Zwischenraum 26 ist auch bodenseitig zwischen der Bodenwand 20 des zylindrischen Innenbehälters 16 und der Bodenplatte 22 gegeben. An der Oberseite wird dieser Zwischenraum durch ein zwischen der Außenseite des Innenbehälters 16 und der Innenseite des Außenbehälters 18 eingeschweißte Formplatte 28 abgeschlossen, welche also den Innenbehälter 16 konzentrisch ausgerichtet im Außenbehälter 18 fixiert. Bodenseitig können zwischen der Bodenwand und der Bodenplatte 22 (nicht gezeigte) Abstandsstücke vorgesehen sein, welche das auf die Bodenwand 20 wirkende Gewicht des Behälter-Füllguts direkt auf die Bodenplatte 22 übertragen.

Mit Abstand unterhalb der Bodenplatte 22 ist ein ebenfalls quadratische in den äußeren Abmessungen etwas kleiner als die Bodenplatte bemessener Fußrahmen 30 vorgesehen, welcher durch zwischen Bodenplatte und Fußrahmen eingeschweißte Stützen 32 in einem vorgegebenen Abstand von der Bodenplatte 22 gehalten ist, der das Einfahren der horizontalen Schenkel von Hubgabeln von Gabelstaplern o.dgl. Flur-Förderfahrzeugen erlaubt.

In den über die Außenfläche des Außenbehälters 18 vortretenden Eckbereichen der Bodenplatte ist jeweils ein sich in senkrechter Richtung bis über das offene obere Ende des Innen- und des Außenbehälters erstreckendes metallisches Eckprofil 34 vorgesehen, die in ihrem oberen Endbereich mit Öffnungen 36 versehen sind, in welche die Anschlagmittel von Huborganen eingreifen können. Außerdem sind zwischen den Schenkeln der Eckprofile horizontale Trägerbleche 38 eingeschweißt, welche das Aufsetzen der Fußplatte 30 eines gleichartigen Behälters 10 und somit die Stapelung der erfindungsgemäßen Behälter 10 übereinander ermöglichen. Mit Abstand unterhalb des oberen Randes des Außen- und Innenbehälters liegenden Bereichs sind die Eckprofile 34 zusätzlich über an den Eckprofilen 34 einerseits und der Außenwandung des Außenbehälters 18 verschweißte Eckbleche 40 verbunden.

In den oberhalb der vortretenden Eckbereiche der Bodenplatte 22 liegenden Bereiche der Außenwandung des Außenbehälters ist außerdem jeweils eine über den oberen Rand des Außenbehälters nach oben vortretende Lasche 42 aufgeschweißt, die in ihrem freien oberen Ende eine im speziellen Fall kreisförmig begrenzte und - wie nachstehend noch geschildert wird - als Riegelaufnahme dienende Öffnung 44 aufweisen. Die in den Fig. 4 und 5 an der rechten Seite der Darstellung vorgesehenen Laschen 42 sind zu einem Lagerblech 46 mit zwei voneinander beabstandete Lagerbohrungen 48, 50 vergrößert, welche zur verschwenkbaren Lagerung von im folgenden noch beschriebenen Gelenkhebeln eines den Deckel 14 verschwenkbar am Behälterkörper 12 halternden Gelenkmechanismus dienen.

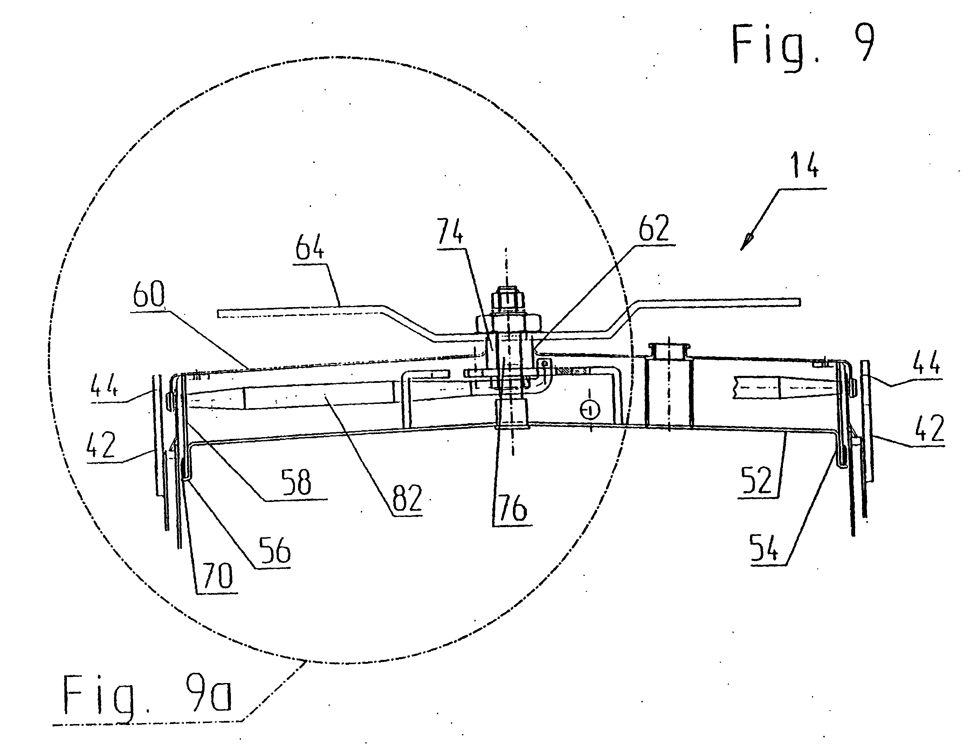

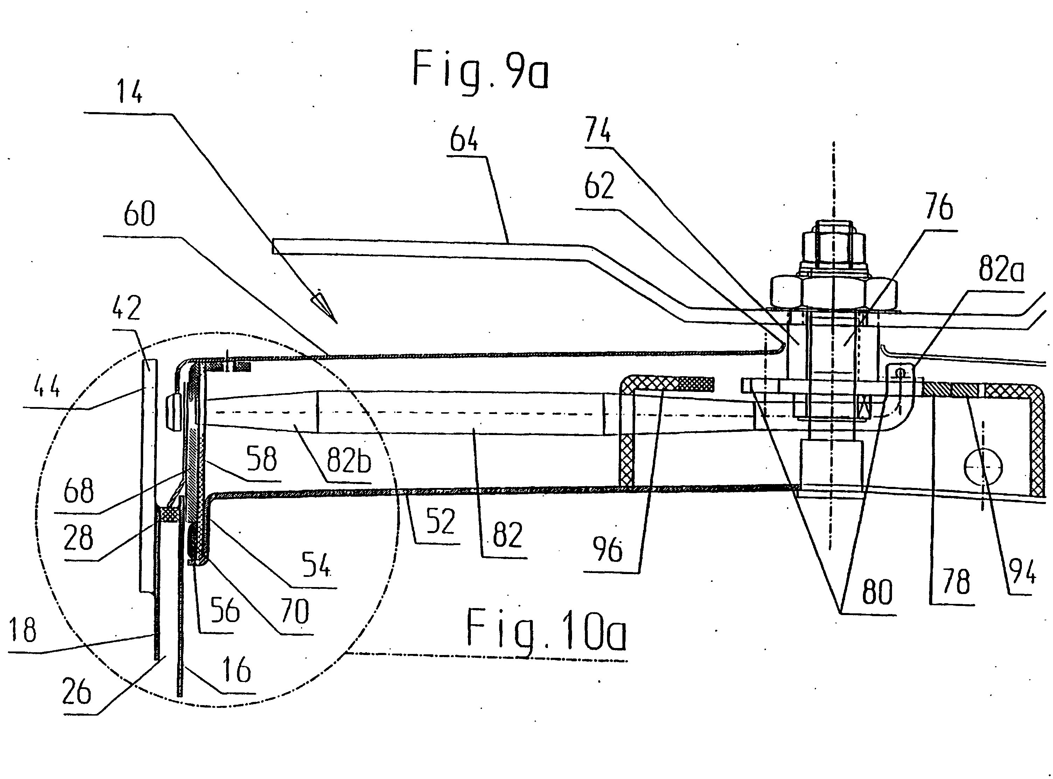

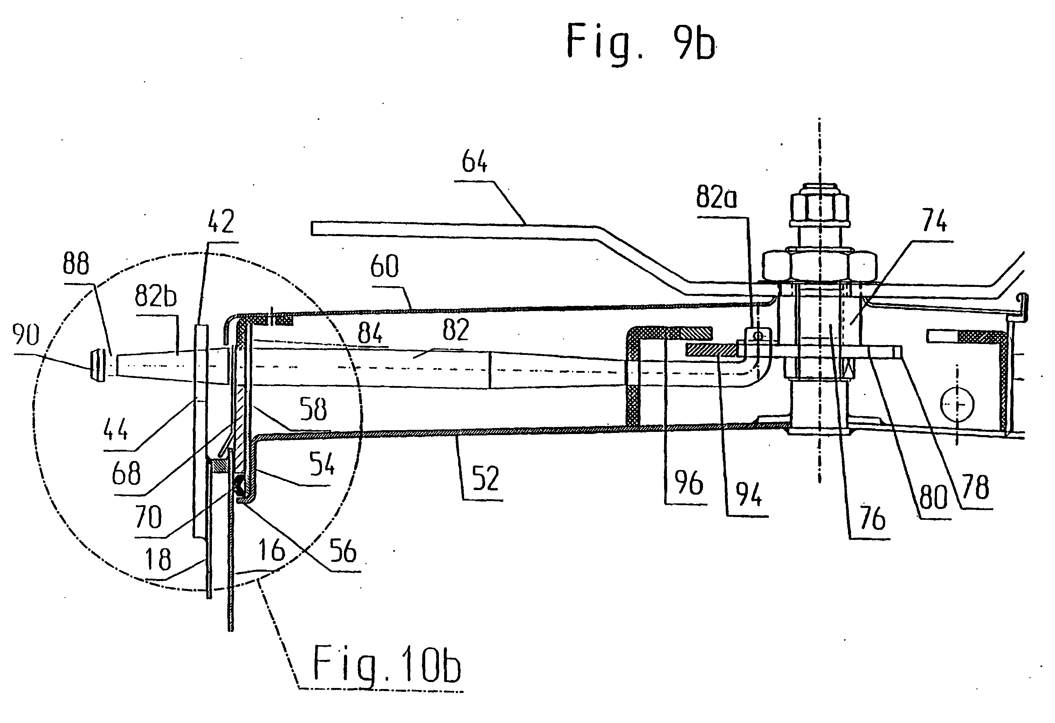

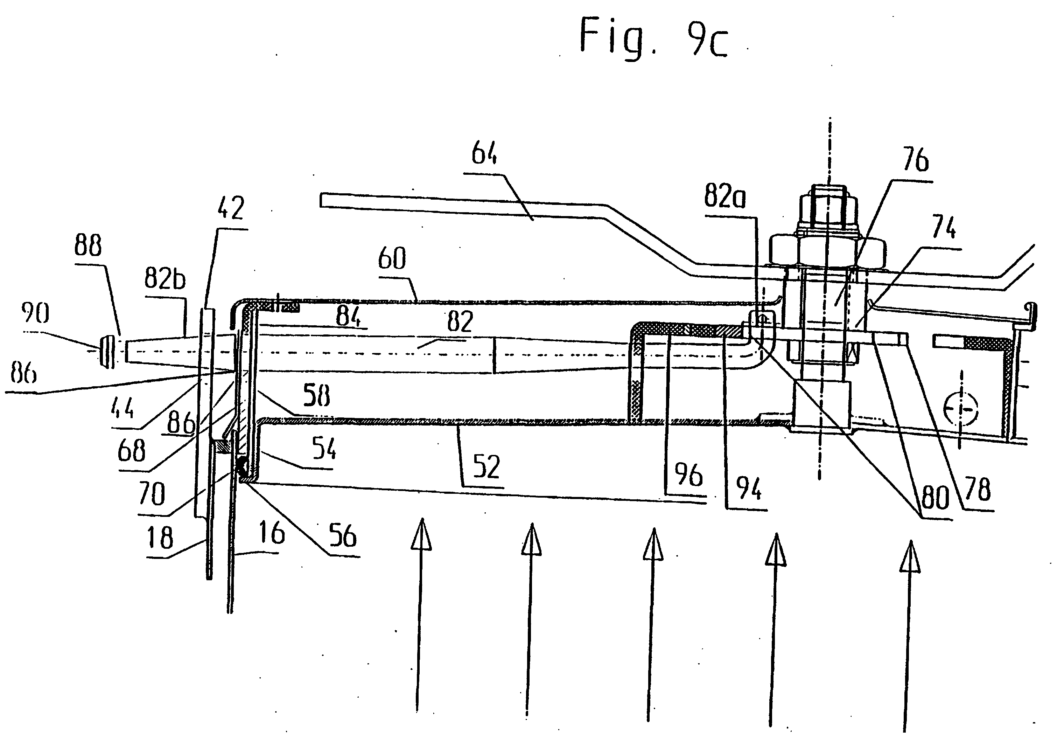

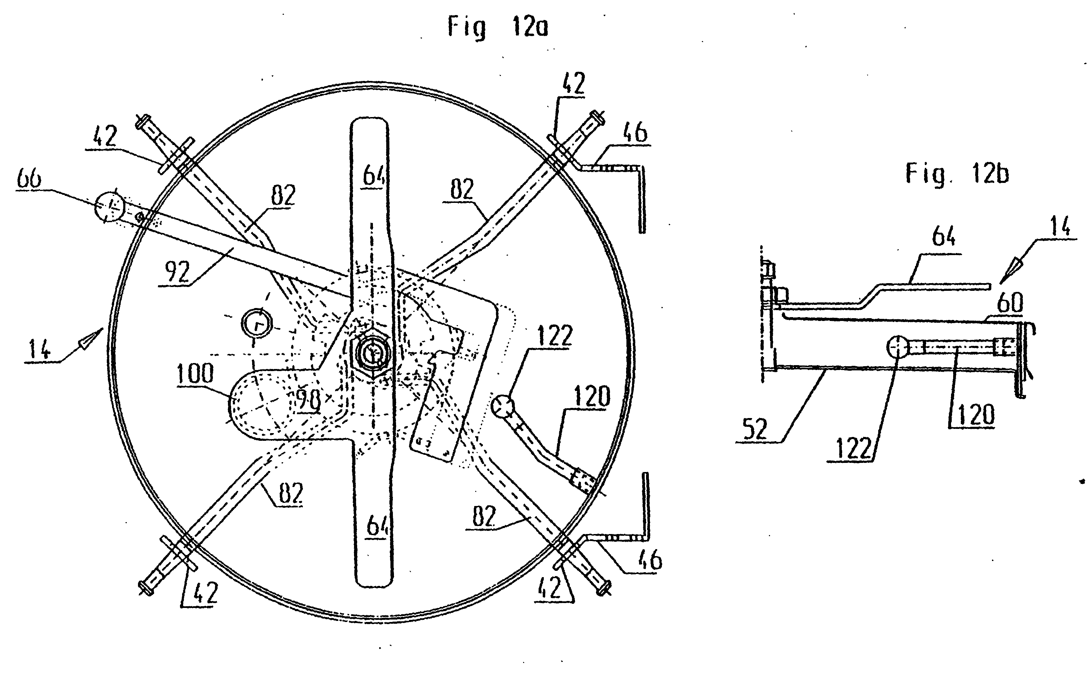

In den Fig. 5 und 9 ist der grundsätzliche Aufbau des Deckels 14 des erfindungsgemäßen Behälters erkennbar. Der Deckel weist zum einen die eigentliche, in der Schließstellung das Behälterinnere abschließende Deckelwandung 52 auf, welche in ihrem Randbereich in einen rechtwinklig ins Behälterinnere umgekanteten ringförmigen Wandungsbereich 54 übergeht, an dessen freien Enden wiederum ein radial nach außen gekanteter umlaufender Flansch 56 angeformt ist, dessen Außendurchmesser geringfügig kleiner als der lichte Innendurchmesser des Innenbehälters 16 bemessen ist. Auf dem ringförmigen Wandungsbereich 54 ist eine die Deckelwandung 52 in Aufwärtsrichtung überragende zylindrische umlaufende Umfangswandung 58 befestigt, welche an ihrem unteren Ende auf dem Flansch 56 abgestützt und mit der Deckelwandung 52 verschweißt ist. Der obere freie Rand der Umfangswandung trägt dann noch eine äußere Deckelwandung 60 aus Metallblech, welche die Umfangswandung 58 radial überragt und im äußeren Randbereich nach unten umgebogen ist. Im Zwischenraum zwischen der inneren Deckelwandung 52 und der äußeren Deckelwandung 60 sind dann noch die Betätigungs- und Verriegelungsorgane einer im folgende noch beschriebenen, den Deckel 14 in der Schließstellung hermetisch dicht im Innenbehälter festlegenden Spann- und Verriegelungseinrichtung angeordnet. Die Betätigung dieser Spann- und Verriegelungseinrichtung erfolgt durch eine drehbar auf einem mittig von der Dekkelwandung 52 nach oben vortretenden und eine mittige Öffnung 62 in der äußeren Deckelwandung 60 durchsetzende Lagerzapfen drehbar gelagerte Handhabe 64, welche die in Fig. 5 erkennbare Form eines zweiarmigen Hebels aufweist. Außerdem ist in der Zeichnungsfigur das aus dem Deckel herausgeführte Betätigungsende 66 eines Verriegelungselements 92 gezeigt, das in den Figuren 11c, 12a und 12b dargestellt ist und dessen Funktion in Verbindung mit diesen Figuren noch beschrieben wird.

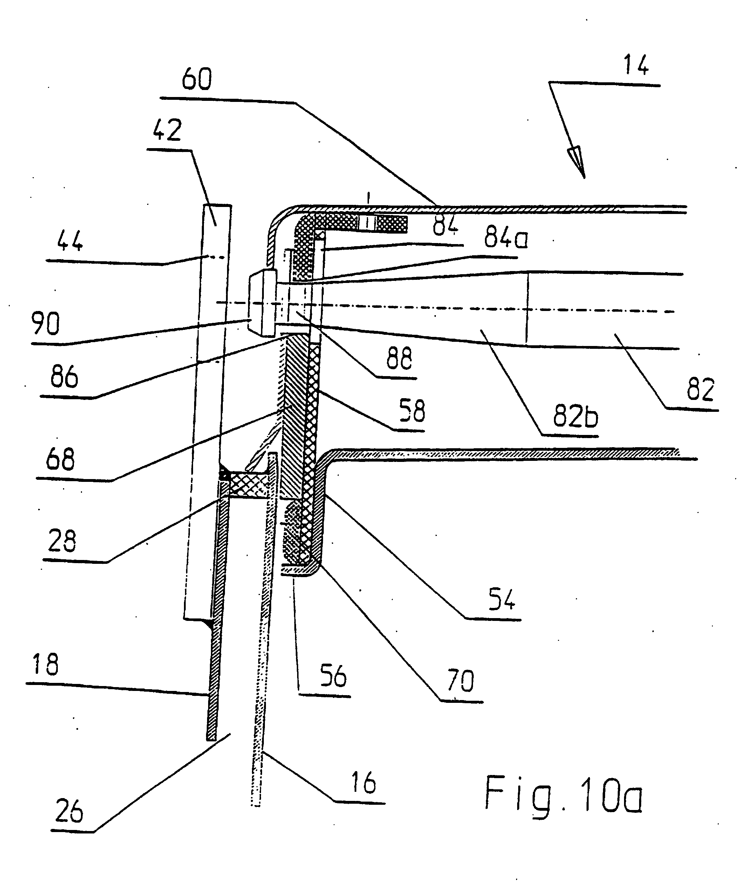

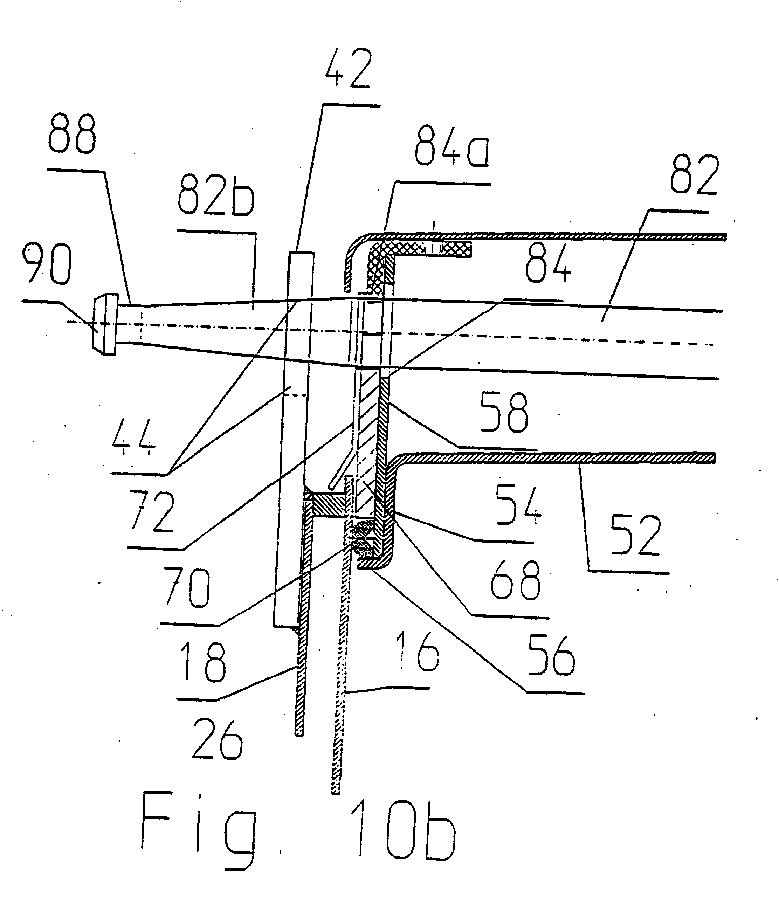

Auf der Umfangswandung 58 des Deckels 14 ist ein zylindrischer Spannring 68 in Richtung der Behälter-Mittelachse verschieblich gehaltert. Zwischen der behälterinneren Randkante des Spannrings 68 und dem Flansch 56 der inneren Deckelwandung 52 ist eine elastische verformbare umlaufende Ringdichtung 70 angeordnet, welche sich aus der in Fig. 10a gezeigten ungespannten Form bei einer Verschiebung des Spannrings 68 in Richtung ins Behälterinnere in die in Fig. 10b gezeigten Gestalt elastisch verformt, wobei sie abdichtend an die Innenwandung des Innenbehälters 16 und die Außenwand der Umfangswandung 58 angedrückt wird. Auf der Außenseite des Spannrings 68 ist noch ein umlaufender Abstreifring 72 aus dünnem Blech angeordnet, welcher sich in seinem unteren behälterzugewandten Randbereich konisch erweitert und mit seiner in der Schließstellung auf der den Zwischenraum zwischen dem Innenbehälter 16 und dem Außenbehälter 18 verschließenden Formplatte 28 aufsitzenden freien Unterkante eine Tropfkante bildet und verhindert, daß sich - beispielsweise aufgrund atmosphärischer Einflüsse - auf dem Deckel 14 sammelnde Feuchtigkeit in den Spalt zwischen Behälter und Deckel eindringt.

Der Aufbau und die Funktion der den Deckel in der Schließstellung hermetisch abgedichtet halternde Spann- und Verriegelungseinrichtung wird nachstehend in Verbindung mit den Figuren 9, 9a bis 9c, 10a, 10b, 11a bis 11c erläutert.

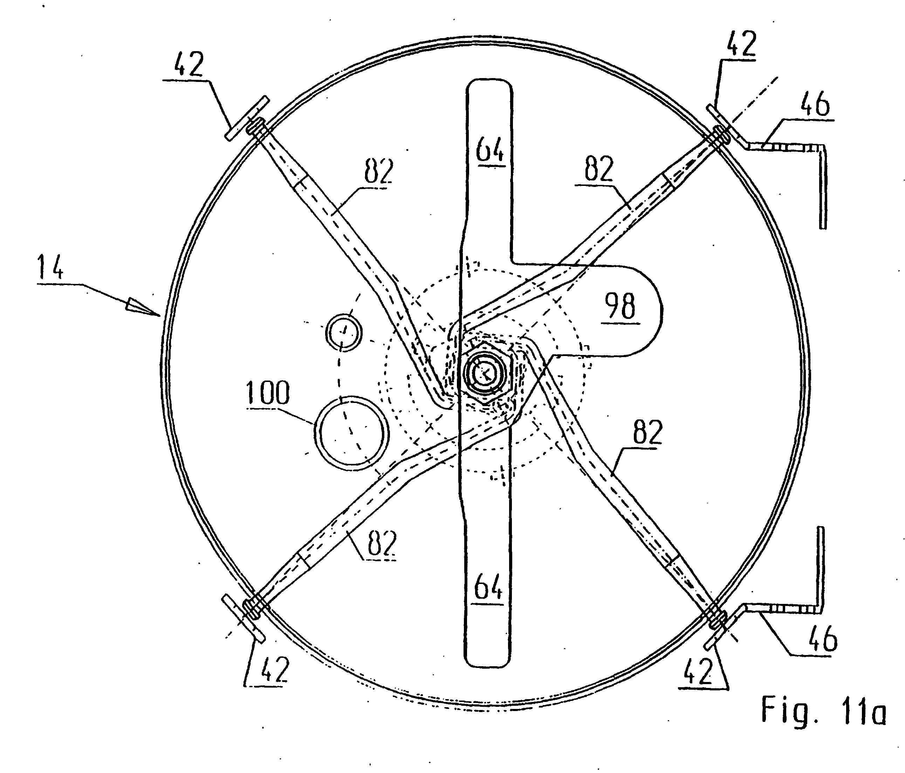

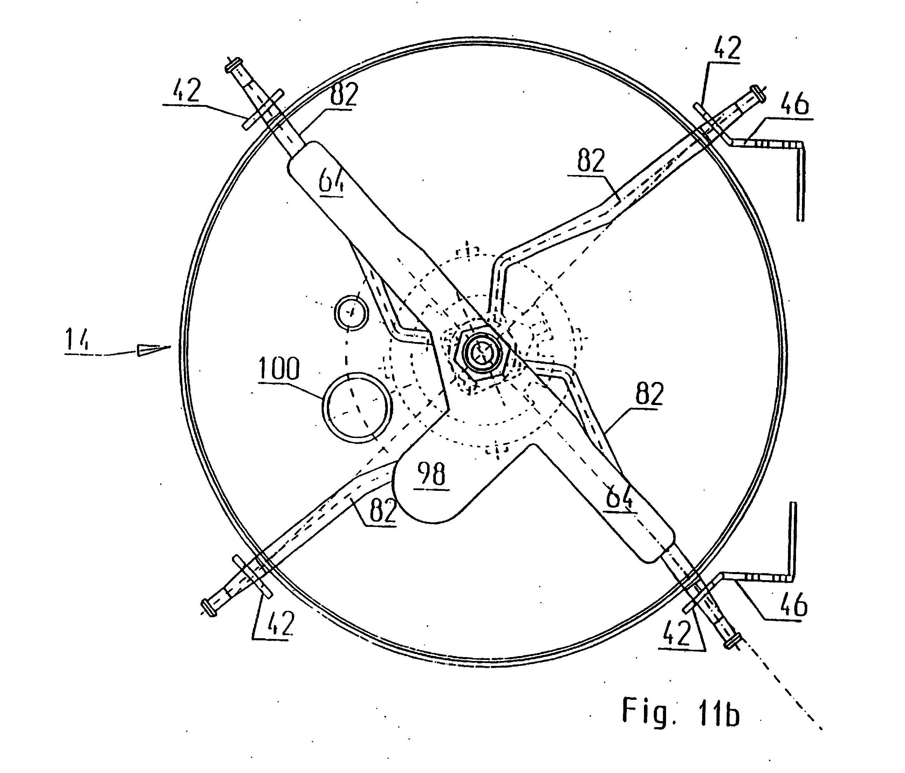

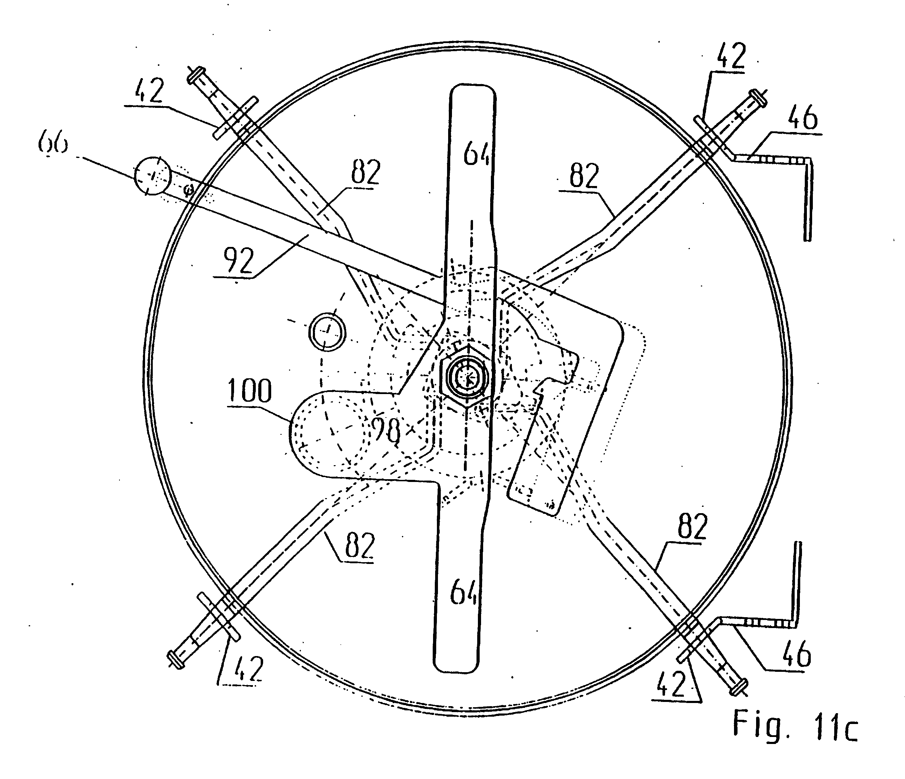

Die oberhalb der äußeren Deckelwandung 60 drehbar angeordnete als zweiarmiger Hebel ausgebildete Handhabe 64 ist mit einer die mittige Öffnung 62 in der äußeren Deckelwandung durchsetzende Muffe 74 drehfest verbunden, die auf einem bereits angesprochenen, von der Oberseite der unteren Deckelwandung 52 nach oben vortretenden und sich durch die Öffnung 62 in der oberen Deckelwandung 60 erstreckenden Zapfen 76 angeordnet ist. Die Muffe 74 trägt an ihrem unteren Ende drehfest eine im speziellen Fall quadratische Betätigungsplatte 78, in deren über die Muffe 74 vortretenden vier Eckbereichen jeweils eine Bohrung 80 vorgesehen ist, in welche das jeweilige innere, nach oben umgekantete Ende 82a von langgestreckten, sich im wesentlichen radial nach außen zur Umfangswandung 58 erstreckenden und diese außen noch radial durchsetzenden schaftartigen Riegelelementen 82 eingreifen. Die Enden 82a sind in den Bohrungen 80 verdrehbar gelagert und werden bei Drehen der Handhabe 64 über die Muffe 74 und die Betätigungsplatte 78 verschoben, wobei die in den Figuren 11a bis 11c erkennbare abgewinkelte Form der Riegelelemente im inneren Endbereich es ermöglicht, daß die radial außen im wesentlichen radial verlaufend geführten Riegelelemente bei der Betätigung der Handhabe aus der Deckel-Schließstellung in die Öffnungsstellung aus der in Fig. 11c veranschaulichten ganz vorgeschobene Riegelstellung bis in wie in Fig. 11a veranschaulichte zurückgezogene Öffnungsstellung verschoben werden können, ohne daß ihre radial inneren Endabschnitte an der Muffe 74 bzw. dem Zapfen 76 anstoßen. Die radial äußeren Enden der Riegelelemente 82 sind durch eine mit einer Führungsbohrung 84 in der Umfangswandung 58 hindurchgeführt. wobei der lichte Innendurchmesser der Führungsbohrung 84 größer als der maximale Außendurchmesser des jeweils zugeordneten Riegelelements ist. Das Riegelelement durchsetzt dann noch eine Aussparurig 86 im Spannring 68 und im Abtropfring 72, die ebenfalls einen Radius aufweisen, welcher größer als der maximale Radius des Riegelelements ist. In ihren radial äußeren Endbereichen weisen die langgestreckten Riegelelemente 82 jeweils einen sich konisch nach außen verjüngenden Spannabschnitt 82b auf, der stirnseitig in eine langgestreckte Riegelelement-Verlängerung 88 übergeht, an deren freiem Ende ein im Durchmesser vergrößerter Kopf 90 vorgesehen ist.

In der Entriegelungsstellung der vorstehend geschilderten Bauteile der Spannund Verriegelungsvorrichtung stehen die Riegelelemente 82 in der in den Figuren 9, 9a, 10a und 11a dargestellten Lage, in welcher die Riegelelemente so weit ins Deckelinnere zurückgezogen sind, daß die Köpfe 90 an den freien Enden der Verlängerungen 88 soeben radial außerhalb des Spannrings 68 und des Abtropfrings 72 stehen. Die Aussparung 86 im Spannring 68 und die Führungsbohrung 84 werden in diesem Zustand also von der Verlängerung 88 des Riegelelements durchsetzt. Aufgrund des geringen Durchmessers dieser Verlängerung 88 kann der Spannring 68 die in den Figuren 9, 9a und 10a dargestellte auf der Oberseite der entspannten Ringdichtung 70 abgestützte angehobene Lage annehmen. Wenn dann die Betätigungshandhabe 64 in Verriegelungsrichtung gedreht wird und über die drehfest angeschlossene Muffe 74 und die Betätigungsplatte 78 die Riegelelemente 82 verschoben werden, tritt der sich nach außen konisch verjüngende Spannabschnitt 82b in die Bohrung in der Führungsbohrung 84 und in die Aussparung 86 des Spannrings 68 ein. Dabei ist die Ausgestaltung so getroffen, daß die Oberseite des konischen Spannabschnitts 82b sich an der Führungsbohrung und einem darüber angebrachten Widerlager 84a und seine Unterseite an der Unterseite der Aussparung 86 im Spannring 68 abstützt, so daß bei zunehmendem Vorschieben der Riegelelemente der Spannring zwangsläufig in Abwärtsrichtung verschoben wird und dann in der geschilderten Weise die Ringdichtung 70 in Höhenrichtung zusammendrückt, wodurch diese sich radial nach außen und innen verformt und in abdichtende Anlage an der Innenwandung des Innenbehälters 16 bzw. der Außenwandung der Umfangswandung 58 des Deckels 14 zur Anlage kommt. Der Deckel 14 wird also im Bereich der Ringdichtung 70 zunächst kraftschlüssig im Innenbehälter 16 festgelegt. Bei weiterem Drehen der Handhabe in die in den Figuren 9c, 10b und 11c veranschaulichte Verriegelungsstellung werden die Riegelelemente 82 so weit nach außen geschoben, daß der konisch verjüngte Spannabschnitt 82b außerhalb der Aussparung 86 im Spannring liegt und noch in die Öffnung 44 der jeweils zugeordneten, am Behälterkörper vorgesehenen nach oben vorstehenden Lasche 42 eingreift. Hier wird also ein zusätzlicher formschlüssiger Verriegelungseingriff der radial äußeren Enden der Riegelelemente 82 mit den Laschen 42 hergestellt, der sicherstellt, daß beim Entriegeln des Deckels auch dann, wenn der Innenraum des Innenbehälters unter hohem Druck steht, ein plötzliches Aufschlagen des Deckels bei der Entspannung der Ringdichtung und somit den Wegfall der kraftschlüssigen Deckelhalterung mit Sicherheit ausgeschlossen ist. Die Entspannung der Ringdichtung 70 erfolgt nämlich bereits vor der Stellung der Riegelelemente, in welcher der Kopf 90 durch die Öffnung 44 in der jeweiligen Lasche 42 zurückgezogen ist.

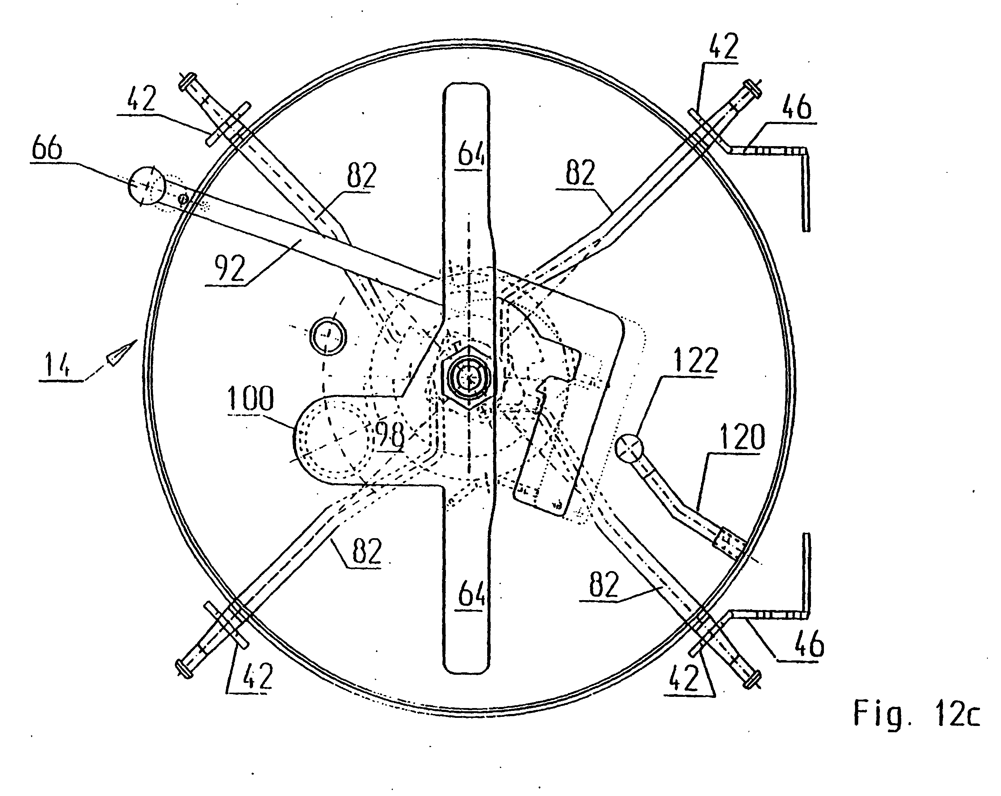

In den Figuren 11c, 12a und 12c ist das bereits früher in Verbindung mit Figur 9 erwähnte langgestreckte Verriegelungselement 92 gezeigt, welches federunterstützt in die ausgezogen dargestellte Verriegelungsstellung gespannt ist, wodurch ein an seinem inneren Ende vorgesehener Riegel unter eine Sperrscheibe 96 und vor einen Sperrnocken 94 gezogen wird. Ein Öffnen des Dekkels durch ungewollt auf die Hebelarme der Handhabe 64 ausgeübte Kräfte ist dadurch ausgeschlossen. Erst wenn das Betätigungsende entgegen der Federvorspannung von der Bedienungsperson bewußt ins Deckelinnere hineingeschoben wird, kommt der Riegel vom Sperrnocken 94 frei und die Handhabe 64 kann gedreht werden. Diese Freigabestellung ist in den genannten Zeichnungsfiguren durch punktierte Darstellung des Verriegelungselements 92 veranschaulicht. Erkennbar ist auch, daß in dem in der Verriegelungsstellung außerhalb des Deckels befindliche Endabschnitt des Verriegelungselements 92 eine Bohrung angebracht ist, so daß durch Anbringen eines Schlosses bzw. einer Plombe ein Einschieben des Verriegelungselements 92 in den Deckel und somit eine Entriegelung des Verschlusses verhindert werden kann.

Von der Handhabe 64 springt horizontal noch ein Abdecklappen 98 vor, welcher in der Schließstellung (Fig. 11c) eine im Deckel vorgesehene und durch einen Schraubeinsatz dicht verschließbare Durchgangsmuffe 100 abdeckt, die-z.B. zum Zweck der Probenentnahme oder zum Nachfüllen - ohne Öffnen des Deckels 14 Zugang zum Behälterinnern ermöglicht.

In Figur 9c ist eine selbsttätige Sicherung des Deckels 14 gegen Öffnen veranschaulicht, welche ein Öffnen des Deckels unter Druck verhindert. Der auf die Unterseite der Deckel-Innenwandung 52 wirkende Druck im Behälter ist durch die nach oben gerichteten Pfeile in der Zeichnungsfigur angedeutet. Dieser Druck wird über den Spannring 68 und die Ausnehmung 86 auf die Stößel 82 übertragen. Der Deckel kann sich dann so weit anheben, daß die Stößel sich an die Oberseite der Öffnungen 44 in den Laschen 42 anlegen. Durch die dann einwirkenden Kräfte bewegen sich die Stößel mit ihren Enden 82a in senkrechter Richtung nach oben und drücken die Betätigungsplatte 78 sowie die Muffe 74 und damit den Nocken 94 auf der Achse 76 so weit aufwärts, daß sich der Verriegelungsmechanismus nicht mehr über die Handhabe 64 betätigen läßt. Die Nocke 94 wird dann in einer Aussparung der Sperrscheibe 96 in der geschlossenen Position gehalten.

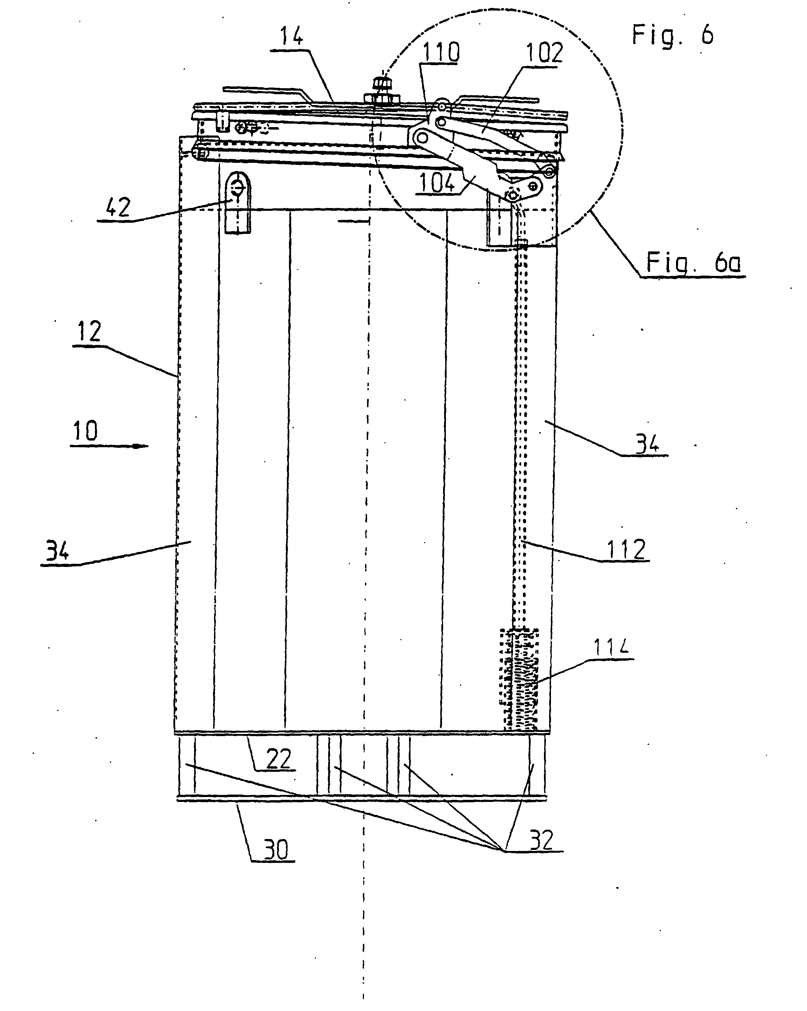

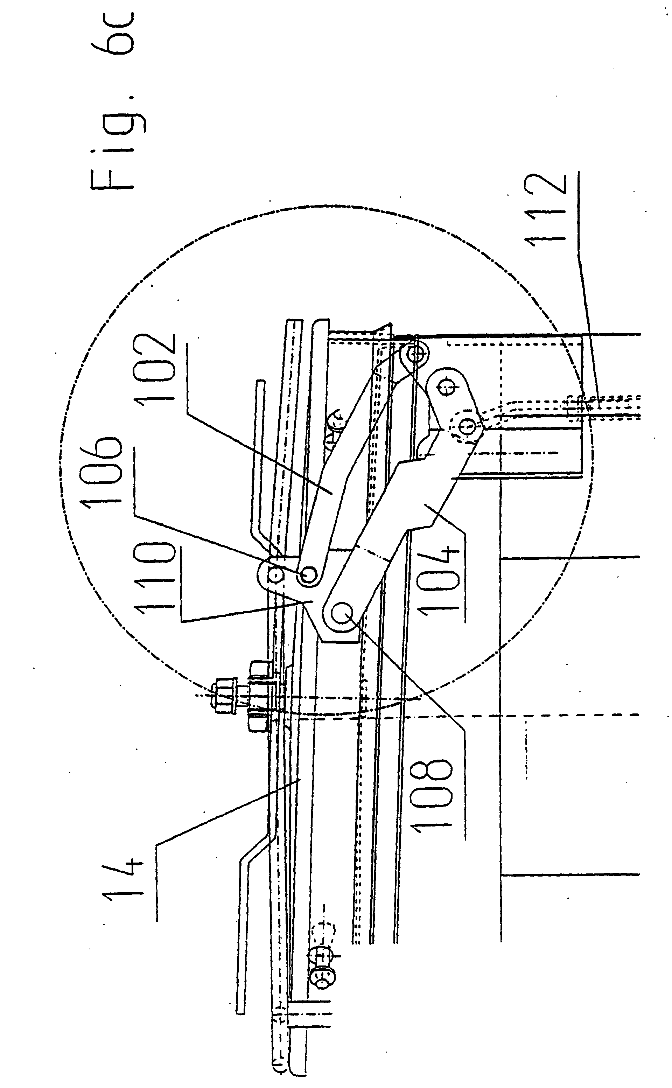

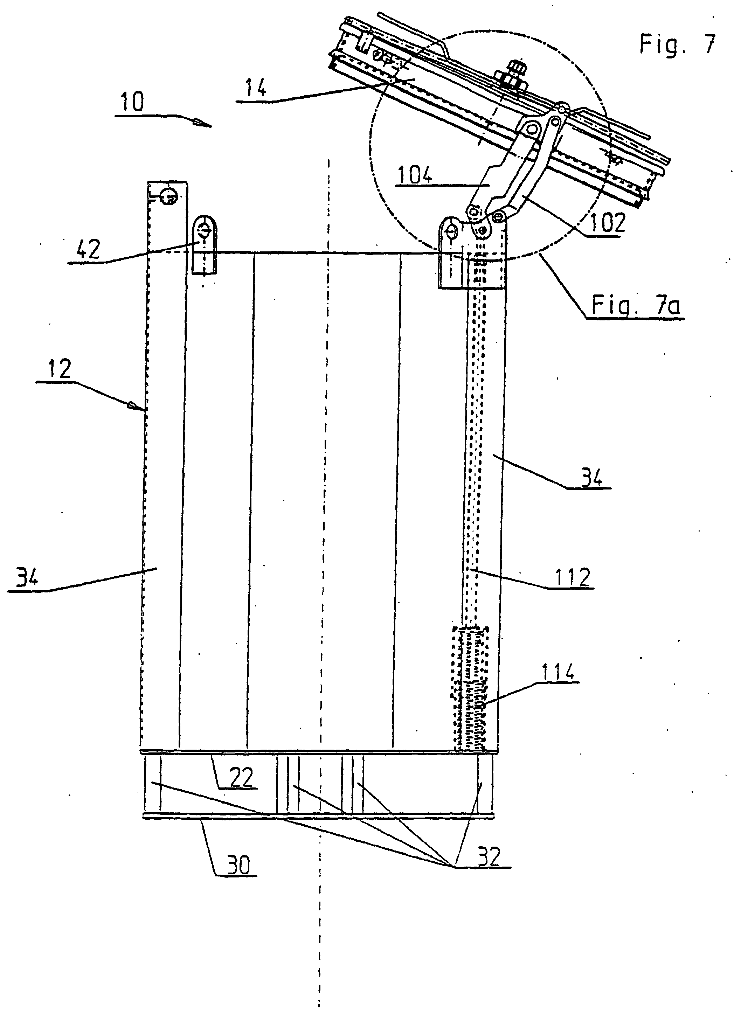

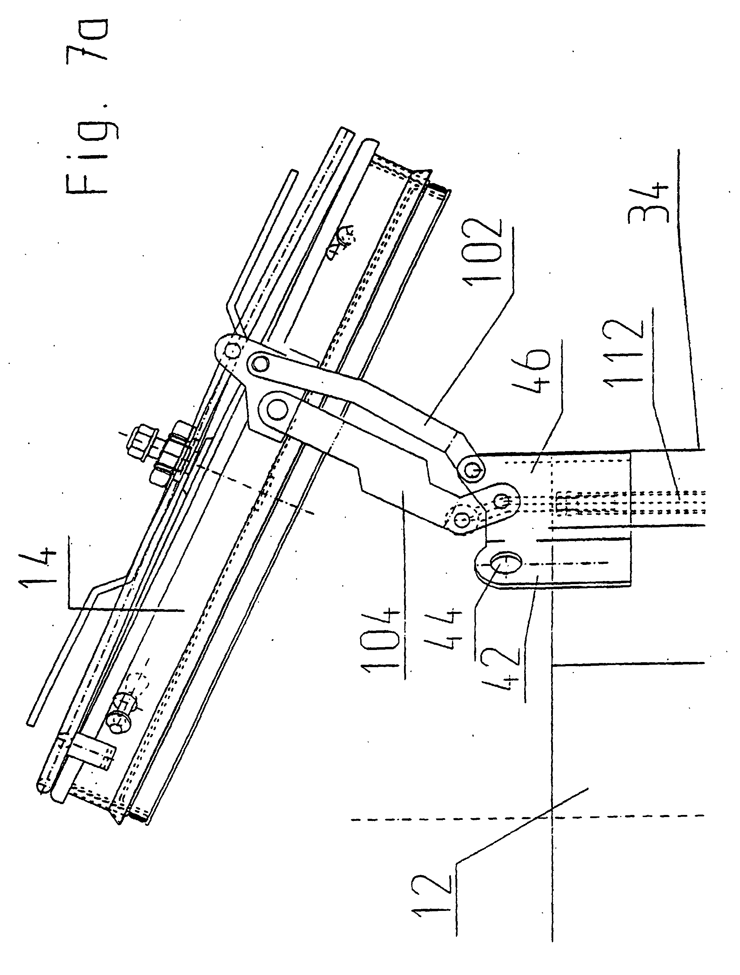

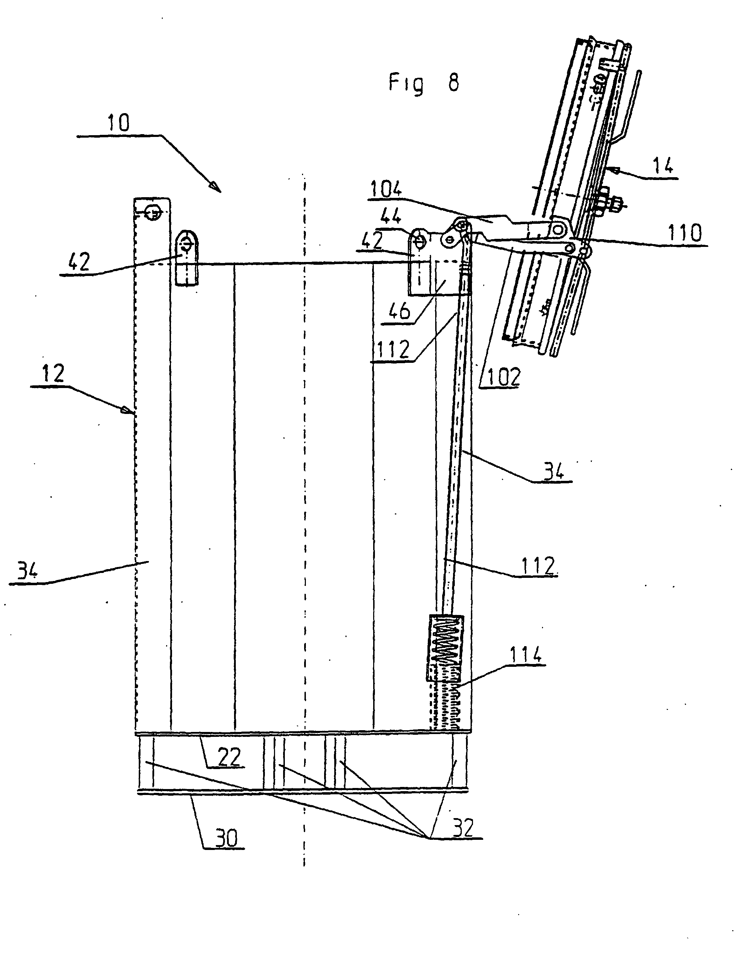

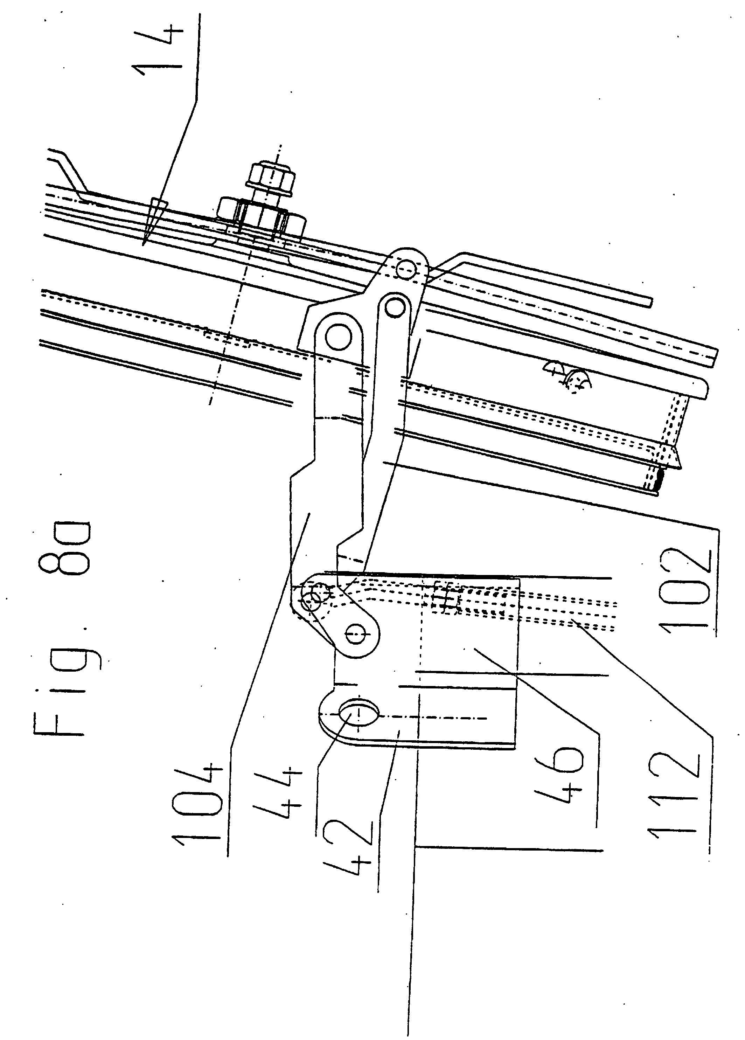

Die verschwenkbare Anlenkung des Deckels 14 am Behälterkörper 12 erfolgt-wie früher erwähnt - durch einen Gelenkmechanismus, der im speziellen Fall als Viergelenkmechanismus ausgebildet ist. Dieser Gelenkmechanismus erzwingt beim Öffnen des Deckels eine Öffnungsbewegung, die in den Fig. 6 bis 8 veranschaulicht ist. Die Öffnungscharakteristik des Deckels ist dadurch gekennzeichnet, daß er zu Beginn seiner Öffnungsbewegung (Fig. 6) zunächst eine überwiegend senkrechte Bewegungskomponente ausführt, die also den in den innenbehälter 16 eintauchenden Teil des Deckels 14 über den Innenbehälter anhebt, worauf der Deckel bei der weiteren Öffnungsbewegung sich über die in Fig. 7 gezeigte Schwenkstellung in die ganz geöffnete Stellung (Fig. 8) verschwenkt, in welcher er zusätzlich seitlich neben den Behälterkörper 12 geführt ist, so daß der Innenbehälter für eine Befüllung von oben oder auch für das Einführen von Reinigungsorganen einer Reinigungsanlage ohne Einschränkung zugänglich ist.

Der zweifache, auf bezüglich einer rechtwinklig zur Deckel-Schwenkachse gegenüberliegenden Seiten vorgesehene Gelenkmechanismus wird behälterkörperseitig jeweils von dem in Verbindung mit Fig. 4 bereits angesprochenen, mit jeweils einer Lasche 42 verbundenen Lagerblech 46 gebildet. In den Lagerbohrungen 48, 50 sind Lagerbolzen vorgesehen, auf welchen die behälterkörperseitigen Enden von Gelenkhebeln 102, 104 verschwenkbar gelagert sind. Die deckelseitigen Enden der Gelenkhebel 102, 104 sind auf Bolzen 106, 108 gelagert, welche von einem am Deckel 14 vorgesehenen Lagerblech 110 vortreten. Durch die Bemessung der wirksamen Länge der Gelenkhebel 102, 104 und die in den Zeichnungsfiguren veranschaulichte Anordnung der Lagerstellen der Gelenkhebel 102, 104 an den Lagerblechen 46, 110 wird die bereits in Verbindung mit den Fig. 6 bis 8 angesprochene Deckel-Bewegungscharakteristik erzielt. In den Fig. 6a bis 8a ist die jeweilige Lage der Gelenkhebel 102, 104 in den den Deckelstellungen gemäß Fig. 6, 7 und 8 entsprechenden Stellungen in vergrößertem Maßstab erkennbar. Dabei ist auch erkennbar, daß am Gelenkhebel 104 eine Druckstange 112 angreift, die von einer auf dem zugeordneten Eckbereich der Bodenplatte 22 gehaltenen Federanordnung 114 unter Druckvorspannung gehalten ist. Durch die von der Federanordnung 114 über die Druckstange 112 in den Gelenkmechanismus eingeleiteten Federkräfte wird das Gewicht des Deckels 14 - teilweise - ausgeglichen, wodurch die Handhabung des Deckels beim Öffnen und Schließen wesentlich erleichtert wird.

Zur Fixierung des Deckels 14 in einer vorgewählten Öffnungsstellung ist beim erfindungsgemäßen Behälter im Bereich des in Fig. 5 unten rechts dargestellten Gelenkmechanismus noch ein Riegel 116 (Fig. 5a) federnd gelagert, an dessen einem Ende ein Betätigungsknopf 118 angeordnet ist. Der Riegel 116 rastet mit einer Aussparung in vollständig geöffneter Position des Deckels 14 an einer zugeordneten Aufnahme der Druckstange 112 so ein, daß der Deckel 14 gegen Zufallen gesichert ist. Durch Betätigung des Knopfs 118 wird die Funktion des Gelenkhebels 104 freigegeben, so daß der Deckel 14 dann geschlossen werden kann.

In den Fig. 12a und 12b ist noch eine Möglichkeit der Innenreinigung des Dekkels 14 veranschaulicht. Hierzu ist in der Umfangswandung 58 des Deckels 14 eine Bohrung vorgesehen, von der ein Rohr 120 in den Zwischenraum zwischen den Deckelwandungen 52, 60 vortritt. Am Ende des Rohrs 120 ist ein Sprühkopf 122 vorgesehen. Durch Anschluß des Rohrs 120 an eine unter Druck stehendes flüssiges Reinigungsmedium führende - nicht gezeigte - äußere Leitung, was z.B. über eine - ebenfalls nicht gezeigte - selbstschließende Schnellkupplung erfolgen kann, kann der Innenraum des geöffneten Deckels erforderlichenfalls in der gewünschten Weise gereinigt werden.

Der in der erfindungsgemäßen Weise ausgebildete Behälter hat sich in Versuchen sowohl hinsichtlich der mechanischen Festigkeit gegen äußere Beanspruchung oder bei Fall als auch der Sicherheit gegen den Austritt von Füllstoff nach solchen Beanspruchungen als in besonders hohem Maße geeignet für die Aufnahme, d.h. die Lagerung und den Transport sowie die Handhabung von flüssigen und schüttfähigen festen Gefahrengütern erwiesen. Aufgrund seiner einfachen und gegen Fehlbedienungen gesicherte Handhabung ist der Behälter praktisch universell einsetzbar und unterstützt so insbesondere auch die Logistik beim Einsatz im Gefahrgutbereich.

## Patentansprüche

1. Behälter (10) für flüssige und/oder feste Stoffe mit einem im Boden- und Umfangswandungs-Bereich durch einen in einen Außenbehälter (18) eingesetzten, vom Boden zur Einfüllöffnung durchgehend zylindrischen Innenbehälter (16) doppelwandig ausgebildeten Behälterkörper (12), der an seiner Oberseite eine in der Draufsicht kreisförmig begrenzte Einfüllöffnung aufweist, welche durch einen mit einer Ringdichtung (70) versehenen verschwenkbaren Deckel (14) hermetisch verschließbar ist, welcher zumindest in einem im Schließzustand behälterseitigen Teilbereich derart kreisförmig begrenzt ist, dass er passend in den innenbehälter (16) einschwenkbar und mit Verriegelungsmitteln versehen ist, die wahlweise von einer aus am Behälterkörper (12) vorgesehenen Verriegelungsaufnahmen (44) zurückgezogenen, in eine formschlüssig in die Verriegelungsaufnahmen eingreifende Stellung betätigbar sind, wobei die Ringdichtung (70) in dem in der Deckel-Schließstellung innerhalb der Einfüllöffnung liegenden Teilbereich des Deckels (14) angeordnet und als geschlossener Dichtring aus elastomerem Material ausgebildet ist, dessen Außendurchmesser in unverformtem Zustand im Wesentlichen gleich bzw. nur geringfügig kleiner als der lichte Innendurchmesser des Innenbehälters (16) und dessen Innendurchmesser im Wesentlichen gleich bzw. nur geringfügig größer als der Außendurchmesser des Deckels (14) in dem den Dichtring (70) in seiner bestimmungsgemäßen Montagestellung auf dem Deckel (14) haltenden Bereich ist,
**dadurch gekennzeichnet,**
**daß** der Deckel (14) in seinem behälterinnenseitigen Endbereich einen umlaufenden, radial vortretenden Flansch (56) aufweist, an den sich in Richtung aus dem Behälterinnern heraus eine zylindrische Umfangswandung (58) anschließt, auf welcher zunächst der Dichtring (70) und dann ein geschlossener zylindrischer Spannring (68) in Behälter-Längsrichtung verschieblich angeordnet sind, und
**daß** der Spannring (68) die behälterinnenseitige Stimwand (52) des Deckels (14) in Richtung aus dem Behälterinnern heraus überragt und an dem über die Deckel-Stirnwand vortretenden Bereich des Spannrings (68) Zustellmittel zur wahlweisen Verschiebung des Spannrings in Richtung ins Behälterinnere bzw. aus dem Behälterinnern heraus angreifen.

2. Behälter nach Anspruch 1, **dadurch gekennzeichnet, daß** der Außenbehälter (18) eine in der Draufsicht polygonale, vorzugsweise achteckige Form hat, und daß der zylindrische Innenbehälter (16) in konzentrischer Ausrichtung zum Außenbehälter (18) angeordnet und sein Außendurchmesser zumindest geringfügig kleiner als der zwischen den Innenflächen des Außenbehälters (18) gemessene lichte Abstand ist.

3. Behälter nach Anspruch 2, **dadurch gekennzeichnet, daß** der Außenbehälter (18) eine im wesentlichen quadratische Bodenplatte (22) aufweist, deren diametral gegenüberliegende Begrenzungskanten im wesentlichen bündig mit der Außenseite der zugeordneten gegenüberliegenden Teilflächen des Außenbehälters (18) ausgerichtet sind.

4. Behälter nach Anspruch 3, **dadurch gekennzeichnet, daß** in dem über die Außenfläche des Außenbehälters (18) vortretenden Eckbereichen der Bodenplatte (22) jeweils ein sich in senkrechter Richtung bis über die Einfüllöffnung erstreckendes metallisches Eckprofil (34) vorgesehen ist.

5. Behälter nach einem der Ansprüche 1 bis 4, **dadurch gekennzeichnet, daß** die Zustellmittel über den Umfang des auf der behälterabgewandten Oberseite der Deckel-Stimwand (52) in Umfangsrichtung verteilt angeordnete, im wesentlichen radial verschieblich geführte und in jeweils zugeordnete Öffnungen (86) im Spannring (68) vorschieb- und zurückziehbare Riegelelemente (82) aufweisen, die mit jeweils einer sich von innen nach außen verjüngenden Begrenzungsfläche (82b) in die jeweils zugeordnete Öffnung (86) im Spannring eingreifen.

6. Behälter nach Anspruch 5, **dadurch gekennzeichnet, daß** die Riegelelemente (82) radial über die in die jeweilige Öffnung im Spannring (68) eingreifende verjüngende Begrenzungsfläche (82b) nach außen verlängert sind, und daß im wesentlichen fluchtend zu den Öffnungen (86) im Spannring vom Behälterkörper (12) nach oben vortretende Laschen (42) mit Öffnungen (44) als Riegelaufnahmen für die Riegelelement-Verlängerungen (88) vorgesehen sind.

7. Behälter nach Anspruch 6, **dadurch gekennzeichnet, daß** am freien äußeren Ende der Riegel-Verlängerungen (88) jeweils ein gegenüber der Riegel-Verlängerung im Durchmesser vergrößerter Kopf (90) vorgesehen ist, dessen Durchmesser jeweils kleiner als der Durchmesser der als Riegelaufnahme vorgesehenen zugeordneten Öffnung (44) in den nach oben vortretenden Laschen (42) ist.

8. Behälter nach Anspruch 7, **dadurch gekennzeichnet, daß** der am freien Ende jeder Riegelelement-Verlängerung (88) vorgesehene Kopf (90) eine sich radial nach außen kegelstumpfförmig verjüngende Begrenzungsfläche aufweist.

9. Behälter nach einem der Ansprüche 5 bis 8, **dadurch gekennzeichnet, daß** die Riegelelemente (82) über jeweils einen langgestreckten Schaftabschnitt an jeweils einem zugeordneten, um die Behälter-Mittelachse drehbaren Hebelarm angeschlossen sind.

10. Behälter nach Anspruch 9, **dadurch gekennzeichnet, daß** die Hebelarme für die Betätigung der Riegelelemente (82) an einer gemeinsamen, um die Behälter-Mittelachse drehbaren Betätigungselement (Betätigungsplatte 78) angeordnet sind, an dessen oberem, vom Deckel (14) vortretenden Ende eine von Hand betätigbare hebelartige Handhabe (64) vorgesehen ist.

11. Behälter nach Anspruch 3 und Anspruch 6, **dadurch gekennzeichnet, daß** auf der Oberseite der Deckel-Stirnwand (52) insgesamt vier jeweils um etwa 90° in Umfangsrichtung zueinander versetzte Riegelelemente (82) vorgesehen sind, und daß die mit den als Riegelaufnahmen dienenden Öffnungen (44) versehenen Laschen (42) jeweils in senkrechter Richtung oberhalb der vortretenden Eckbereiche der Bodenplatte (22) vom oberen Rand des Behälterkörpers (12) in senkrechter Richtung vortretend angeordnet sind.

12. Behälter nach Anspruch 10 oder 11, **dadurch gekennzeichnet, daß** die Abmessungen und die Lage der an den Riegelelementen (82) vorgesehenen, in zugeordnete Öffnungen (86) im Spannring (78) eingreifenden, sich nach außen verjüngenden Begrenzungsflächen (82b) und die Riegelelement-Verlängerungen (88) sowie die wirksame Länge der um die Behälter-Mittelachse drehbaren Hebelarme so aufeinander abgestimmt sind, daß bei einer Drehbetätigung der Handhabe (64) aus der Schließstellung des Deckels (14) über einen ersten Teilbetätigungsweg der Spannring (78) um ein solches Maß in senkrechter Richtung freigegeben wird, daß der in der De-ckel-Schließstellung vom Spannring (78) in dichtende Anlage an den Innenbehälter (16) verformte Dichtring (70) sich elastisch in seine Ausgangsform zurückverformt, wobei die Riegelelement-Verlängerungen (88) noch durch die als Riegelaufnahmen dienenden Öffnungen (44) in den Laschen (42) hindurchgreifen und erst bei weiterer Drehbetätigung über den restlichen Betätigungsweg aus den Öffnungen (44) in den Laschen (42) zurückgezogen werden.

13. Behälter nach Anspruch 12 **dadurch gekennzeichnet, daß** eine zwischen der hebelartigen Handhabe (64) und dem Deckel (14) wirksame, von Hand außer Wirkung setzbare Anschlageinrichtung vorgesehen ist, welche bei einer Betätigung der hebelartigen Handhabe (64) aus der Schließstellung nach einer Drehung um den ersten Teilbetätigungsweg wirksam wird.

14. Behälter nach Anspruch 13, **dadurch gekennzeichnet, daß** die Anschlageinrichtung einen der hebelartigen Handhabe zugeordneten zur Deckeloberseite vortretenden Anschlag einerseits und einen vom Deckel nach oben vortretende im Betätigungsweg des Anschlags angeordneten Gegenanschlag aufweisen, und daß der der hebelartigen Handhabe (64) zugeordnete Anschlag aus seiner am Gegenanschlag zur Anlage kommenden Anschlagstellung von Hand herausbeweglich ausgebildet ist.

15. Behälter nach Anspruch 14, **dadurch gekennzeichnet, daß** der Anschlag federnd in die Anschlagstellung am Gegenanschlag vorgespannt und durch ein der hebelartigen Handhabe (64) zugeordnetes Entriegelungselement entgegen der Federvorspannung aus der Anschlagstellung herausstellbar ist.

16. Behälter nach einem der Ansprüche 1 bis 15, **dadurch gekennzeichnet, daß** der Deckel (14) verschwenkbar am oberen Rand des Behälterkörpers (12) angelenkt ist.

17. Behälter nach Anspruch 16, **dadurch gekennzeichnet, daß** der Deckel (14) über mehr als 90° verschwenkbar am Behälterkörper (12) angelenkt ist.

18. Behälter nach Anspruch 17, **gekennzeichnet durch** eine von Hand betätig bare Deckel-Feststelleinrichtung (116; 118), welche den Deckel in eine Zwischenstellung zu fixieren ertaubt.

19. Behälter nach einem der Ansprüche 16 bis 18, **dadurch gekennzeichnet, daß** der Deckel (14) über einen Gelenkmechanismus am Behälterkörper (12) angelenkt ist, welcher den Deckel (14) bei der beginnenden Öffnungsbewegung mit einer im wesentlichen aus dem Innenbehälter (16) herausgerichteten Bewegungskomponente führt und erst nach Austritt des Deckels (14) aus der Mündung des Innenbehälters (16) in die Schwenkbewegung übergeht.

20. Behälter nach Anspruch 19, **dadurch gekennzeichnet, daß** der Gelenkmechanismus als Viergelenkmechanismus (46; 102; 104; 110) ausgebildet ist.

21. Behälter nach Anspruch 18 und 19 oder 20, **dadurch gekennzeichnet, daß** der Gelenkmechanismus in seiner Kinematik so ausgebildet ist, daß der in die Zwischenstellung verschwenkte und fixierte Deckel (14) in der Draufsicht seitlich versetzt zum Behälterkörper (12) steht.

22. Behälter nach einem der Ansprüche 19 bis 21, **dadurch gekennzeichnet, daß** am Gelenkmechanismus eine Feder-Vorspanneinrichtung (114) angreift, die zumindest während des ersten Teils der Öffnungsbewegung des Deckels (14) aus seiner Schließstellung eine in Öffnungsrichtung gerichtete Kraft erzeugt, welche das in Schließrichtung wirkende Gewicht des Deckels (14) zumindest teilweise ausgleicht.

23. Behälter nach einem oder mehrere der Ansprüche 1 bis 22, **dadurch gekennzeichnet, daß** zumindest die mit dem Behälter-Füllgut in Kontakt kommenden Teile des Behälters (10) aus einer korrosionsbeständigen und gegen das Füllgut chemisch resistenten Metallegierung hergestellt sind.

## Claims

1. Container (10) for liquid and/or solid substances, having a container body (12) which is of double-walled form in the base and circumferential regions as a result of an inner container (16) inserted into an outer container (18) and continuously cylindrical from the base to the filling aperture, and has at its top a filling aperture which is of circular outline in plan view and can be hermetically sealed by a pivotable lid (14) provided with an annular seal (70), which lid (14), at least in a part-region on the container side in the closed state, is of circular form such that it can be pivoted to fit into the inner container (16) and is provided with locking means which are optionally actuable from a position retracted from locking seatings ( 44) provided on the container body (12) into a position engaging with positive fitting into the locking seatings, the annular seal (70) being disposed in the part-region of the lid (14) lying within the filling aperture in the closed position of the lid and being formed as a continuous sealing ring of elastomeric material, whose external diameter in the undeformed state is substantially equal to or only slightly smaller than the clear internal diameter of the inner container (16) and whose internal diameter is substantially equal to or only slightly larger than the external diameter of the lid (14) in the region retaining the sealing ring (70) in its intended assembly position on the lid (14),
**characterized In that**
the lid (14), in its end region facing the interior of the container, comprises a peripheral, radially projecting flange (56) which is adjoined, in the direction away from the interior of the container, by a cylindrical peripheral wall (58) on which first the sealing ring (70) and then a continuous cylindrical tensioning ring (68) are disposed to be displaceable in the longitudinal direction of the container, and
**in that** the tensioning ring (68) projects beyond the end wall (52) of the lid (14) on the interior of the container, in the direction away from the interior of the container, and adjustment means for the optional displacement of the tensioning ring in the direction leading towards the interior of the container or out of the interior of the container engage onto the region of the tensioning ring (68) projecting beyond the lid end wall.

2. Container according to Claim 1, **characterized in that** the outer container (18) has a shape which is polygonal, preferably octagonal, in plan view, and **in that** the cylindrical inner container (16) is disposed in concentric orientation to the outer container (18) and its external diameter is at least slightly smaller than the clear distance measured between the interior surfaces of the outer container (18).

3. Container according to Claim 2, **characterized in that** the outer container (18) comprises a substantially square base plate (22), whose diametrically opposite limiting edges are oriented substantially flush with the outside of the assigned opposite part-surfaces of the outer container (18).

4. Container according to Claim 3, **characterized in that**, in the comer regions of the base plate (22) projecting beyond the outer surface of the outer container (18) a metallic comer section (34) extending to beyond the filling aperture in the vertical direction is in each case provided.

5. Container according to one of Claims 1 to 4, **characterized in that** the adjustment means comprise locking elements (82) distributed in the peripheral direction on the top, remote from the container, of the lid end wall (52) beyond the periphery thereof,and guided in a substantially radially displaceable manner and capable of being advanced into and retracted from respectively assigned apertures (86) in the tensioning ring (68), which locking elements (82) each engage into the respectively assigned aperture (86) in the tensioning ring by a limiting surface (82b) which in each case tapers from inside to outside.

6. Container according to Claim 5, **characterized in that** the locking elements (82) are extended radially outwards via the tapering limiting surface (82b) engaging into the respective aperture in the tensioning ring (68), and **in that** upward-projecting tabs (42) with apertures (44) as locking seatings for the locking element extensions (88) are provided substantially flush with the apertures (86) in the tensioning ring of the container body (12).

7. Container according to Claim 6, **characterized in that** a head (90), enlarged in diameter by comparison with the locking extension, is provided in each case on the free outer end of the locking extensions (88), the diameter of which head (90) is in each case smaller than the diameter of the assigned aperture (44), provided as a locking seating, in the upward-projecting tabs (42).

8. Container according to Claim 7, **characterized in that** the head (90) provided at the free end of each locking element extension (88) comprises a limiting surface tapering radially and frustoconically outwards.

9. Container according to one of Claims 5 to 8, **characterized in that** the locking elements (82) are each connected via an elongate shank section to an assigned lever arm rotatable about the central axis of the container.

10. Container according to Claim 9, **characterized in that** the lever arms for the actuation of the locking elements (82) are disposed on a common actuating element (actuating plate 78) rotatable about the central axis of the container, on whose upper end, projecting from the lid (14), a manually actuable lever-like handle (64) is provided.

11. Container according to Claim 3 and Claim 6, **characterized in that** a total of four locking elements (82), each offset relative to one another by approximately 90° in the peripheral direction, are provided on the top of the lid end wall (52) and **in that** the tabs (42) provided with apertures (44) serving as locking seatings are each disposed to project in the vertical direction from the upper edge of the container body (12) above the projecting comer regions of the base plate (22).

12. Container according to Claim 10 or 11, **characterized in that** the dimensions and the position of the outward-tapering limiting surfaces (82b) provided on the locking elements (82) and engaging into assigned apertures (86) in the tensioning ring (78) and the locking element extensions (88), and also the effective length of the lever arms rotatable about the central axis of the container, are so matched to one another that, in the event of a rotational actuation of the handle (64) out of the closed position of the lid (14) over a first partial actuation path, the tensioning ring (78) is released in the vertical direction to such an extent that the sealing ring (70), which in the closed position of the lid is deformed by the tensioning ring (78) into sealing contact on the inner container (16), is deformed back elastically into its initial shape, the locking element extensions (88) still engaging through the apertures (44), serving as locking seatings, in the tabs (42) and are only retracted out of the apertures (44) in the tabs (42) on further rotational actuation over the residual actuation path.

13. Container according to Claim 12, **characterized in that** a stop device which is active between the lever-like handle (64) and the lid (14) and can be manually inactivated is provided, and, on actuation of the lever-like handle (64) out of the closed position, becomes active after one rotation over the first partial actuation path.

14. Container according to Claim 13, **characterized in that** the stop device comprising a stop assigned to the lever-like handle and projecting towards the top of the lid, on the one hand, and a counter-stop projecting upwards from the lid and disposed in the actuation path of the stop on the other hand, and **in that** the stop assigned to the lever-like handle (64) is configured to be manually moveable out of its stop position in which it comes to rest against the counter-stop.

15. Container according to Claim 14, **characterized in that** the stop is resiliently pretensioned in the stop position against the counter-stop and can be adjusted out of the stop position by an unlocking element assigned to the lever-like handle (64), against the spring prestress.

16. Container according to one of Claims 1 to 15, **characterized in that** the lid (14) is pivotably articulated on the upper edge of the container body (12).

17. Container according to Claim 16, **characterized in that** the lid (14) is articulated on the container body (12) to be pivoted through more than 90°.

18. Container according to Claim 17, **characterized by** a manually actuatable lid securing device (116; 118), which allows the lid to be fixed in an intermediate position.

19. Container according to one of Claims 16 to 18, **characterized in that** the lid (14) is articulated on the container body (12) via a joint mechanism which guides the lid (14), during the start of the opening movement, with a movement component oriented substantially out from the inner container (16) and only makes the transition to the pivot movement after the lid (14) has emerged from the mouth of the inner container (16).

20. Container according to Claim 19, **characterized in that** the joint mechanism is configured as a four-joint mechanism (46; 102; 104; 110).

21. Container according to Claim 18 and 19 or 20, **characterized in that** the joint mechanism is cinematically so configured that the lid (14), pivoted into the intermediate position and fixed, is laterally offset relative to the container body (12) in plan view.

22. Container according to one of Claims 19 to 21, **characterized in that** a spring prestress device (114) engages on the joint mechanism and, at least during the first part of the opening movement of the lid (14) out of its closed position, generates a force oriented in the opening direction which at least partially compensates for the weight of the lid (14) acting in the closing direction.

23. Container according to one or more of Claims 1 to 22, **characterized in that** at least the parts of the container (10) coming into contact with the container contents are produced from a corrosion-resistant metal alloy which is also chemically resistant to the contents.

## Revendications

1. Récipient (10) pour substances liquides et/ou solides comportant un corps (12) à double paroi dans la zone du fond et de la paroi périphérique qui est formé par un récipient intérieur (16) cylindrique du fond à l'orifice de remplissage placé dans un récipient extérieur (18), lequel corps (12) présente sur son côté supérieur un orifice de remplissage ayant, vu de dessus, une limite circulaire qui peut être fermé hermétiquement par un couvercle basculant (14) pourvu d'un joint annulaire (70), lequel couvercle (14) a, au moins dans une partie côté récipient à l'état fermé, une limite circulaire de façon telle qu'il s'ajuste en basculant dans le récipient intérieur (16), et est pourvu de moyens de verrouillage manoeuvrables d'une position reculée de récepteurs de verrouillage (44) prévus sur le corps de récipient (12) à une position engagée dans les récepteurs de verrouillage, le joint annulaire (70) étant placé dans la partie du couvercle (14) située, lorsque le couvercle est fermé, à l'intérieur de l'orifice de remplissage et étant un joint annulaire fermé en élastomère dont le diamètre extérieur, à l'état non déformé, est sensiblement égal ou seulement légèrement inférieur au diamètre intérieur du récipient intérieur (16) et dont le diamètre intérieur est sensiblement égal ou seulement légèrement supérieur au diamètre extérieur du couvercle (14) dans la zone qui tient le joint annulaire (70) dans sa position de montage prévue sur le couvercle (14),
**caractérisé par le fait**
**que** le couvercle (14) présente dans sa partie d'extrémité côté intérieur du récipient un rebord périphérique saillant radialement (56) auquel se joint dans la direction opposée à l'intérieur du récipient une paroi périphérique cylindrique (58) sur laquelle sont placés, mobiles dans la direction longitudinale du récipient, d'abord le joint annulaire (70) et ensuite un anneau de serrage cylindrique fermé (68), et
**que** l'anneau de serrage (68) dépasse de la paroi frontale côté intérieur du récipient (52) du couvercle (14) dans la direction opposée à l'intérieur du récipient, et sur la partie de l'anneau de serrage (68) qui dépasse de la paroi frontale du couvercle agissent des moyens d'approche pour le déplacement au choix de l'anneau de serrage en direction de l'intérieur du récipient ou dans la direction opposée.

2. Récipient selon la revendication 1, **caractérisé par le fait que** le récipient extérieur (18) a vu de dessus une forme polygonale, de préférence octogonale, et que le récipient intérieur cylindrique (16) est placé coaxialement avec le récipient extérieur (18) et son diamètre extérieur est au moins légèrement inférieur à la distance entre les faces intérieures du récipient extérieur (18).

3. Récipient selon la revendication 2, **caractérisé par le fait que** le récipient extérieur (18) présente une plaque de fond sensiblement carrée (22) dont les côtés limites diamétralement opposés affleurent sensiblement le côté extérieur des faces partielles opposées associées du récipient extérieur (18).

4. Récipient selon la revendication 3, **caractérisé par le fait que** dans chacune des zones de coin de la plaque de fond (22) qui dépassent de la surface extérieure du récipient extérieur (18) est prévu un profil de coin métallique (34) qui s'étend verticalement jusqu'au-delà de l'orifice de remplissage.

5. Récipient selon l'une des revendications 1 à 4, **caractérisé par le fait que** les moyens d'approche présentent des éléments verrous (82) répartis dans la direction circonférentielle sur le côté supérieur opposé au récipient de la paroi frontale (52) du couvercle, guidés mobiles sensiblement radialement et pouvant être avancés et reculés dans des ouvertures associées (86) faites dans l'anneau de serrage (68), et qui s'engagent dans l'ouverture associé (86) de l'anneau de serrage par une surface limite (82b) qui se rétrécit de l'intérieur vers l'extérieur.

6. Récipient selon la revendication 5, **caractérisé par le fait que** les éléments verrous (82) sont prolongés radialement vers l'extérieur au-delà de la surface limite (82b) se rétrécissant qui s'engage dans l'ouverture de l'anneau de serrage (68), et que des pattes (42) qui font saillie du corps de récipient (12) vers le haut sensiblement dans l'alignement des ouvertures (86) de l'anneau de serrage sont pourvues d'ouvertures (44) comme récepteurs de verrou pour les rallonges d'éléments verrous (88).

7. Récipient selon la revendication 6, **caractérisé par le fait qu'**à l'extrémité extérieure libre des rallonges de verrou (88) est prévue une tête (90) de plus grand diamètre que la rallonge de verrou et dont le diamètre est inférieur au diamètre de l'ouverture associée (44) prévue comme récepteur de verrou dans les pattes saillant vers le haut (42).

8. Récipient selon la revendication 7, **caractérisé par le fait que** la tête (90) prévue à l'extrémité libre de chaque rallonge d'élément verrou (88) présente une surface limite qui se rétrécit en tronc de cône radialement vers l'extérieur.

9. Récipient selon l'une des revendications 5 à 8, **caractérisé par le fait que** les éléments verrous (82) sont reliés chacun par une partie tige allongée à un bras de levier associé pouvant tourner autour de l'axe du récipient.

10. Récipient selon la revendication 9, **caractérisé par le fait que** les bras de levier pour la manoeuvre des éléments verrous (82) sont placés sur un élément de manoeuvre commun (plaque de manoeuvre 78) pouvant tourner autour de l'axe-du récipient et à l'extrémité supérieure, dépassant du couvercle (14), duquel est prévue une poignée du genre levier (64) manoeuvrable à la main.

11. Récipient selon la revendication 3 et la revendication 6, **caractérisé par le fait que** sur le côté supérieur de la paroi frontale (52) du couvercle sont prévus au total quatre éléments verrous (82) décalés les uns des autres d'environ 90° dans la direction circonférentielle, et que les pattes (42) pourvues d'ouvertures (44) servant de récepteurs de verrou sont placées, dans la direction verticale, au-dessus des parties de coin saillantes de la plaque de fond (22), en faisant saillie du bord supérieur du corps de récipient (12) dans la direction verticale.

12. Récipient selon l'une des revendications 10 et 11, **caractérisé par le fait que** les dimensions et la position des surfaces limites (82b) prévues sur les éléments verrous (82), s'engageant dans des ouvertures associées (86) de l'anneau de serrage (78) et se rétrécissant vers l'extérieur, les rallonges d'éléments verrous (88) et la longueur active des bras de levier pouvant tourner autour de l'axe du récipient sont accordées entre elles de façon que lors d'une manoeuvre de rotation de la poignée (64) de la position fermée du couvercle (14) sur une première course partielle de manoeuvre, l'anneau de serrage (78) soit libéré dans la direction verticale d'une quantité telle que le joint annulaire (70), qui, lorsque le couvercle est fermé, est déformé par l'anneau de serrage (78) de façon à être mis en appui étanche contre le récipient intérieur (16), reprenne élastiquement sa forme initiale, les rallonges d'éléments verrous (88) passant alors encore à travers les ouvertures (44) des pattes (42) qui servent de récepteurs de verrou et étant retirées des ouvertures (44) des pattes (42) seulement lors de la poursuite de la manoeuvre de rotation sur la course restante de manoeuvre.

13. Récipient selon la revendication 12, **caractérisé par le fait qu'**il est prévu un dispositif de butée agissant entre la poignée du genre levier (64) et le couvercle (14) et pouvant être mis hors d'action à la main qui agit lors d'une manoeuvre de la poignée du genre levier (64) à partir de la position fermée après une rotation de la première course partielle de manoeuvre.

14. Récipient selon la revendication 13, **caractérisé par le fait que** le dispositif de butée présente une butée saillant vers le côté supérieur du couvercle et associée à la poignée du genre levier et une contre-butée saillant du couvercle vers le haut et placée dans la course de manoeuvre de la butée, et que la butée associée à la poignée du genre levier (64) peut être enlevée à la main de sa position de butée venant en appui contre la contre-butée.

15. Récipient selon la revendication 14, **caractérisé par le fait que** la butée est précontrainte élastiquement en position de butée contre la contre-butée et peut être enlevée de cette position de butée contre la précontrainte élastique par un élément de déverrouillage associé à la poignée du genre levier (64).

16. Récipient selon l'une des revendications 1 à 15, **caractérisé par le fait que** le couvercle (14) est articulé au bord supérieur du corps de récipient (12).

17. Récipient selon la revendication 16, **caractérisé par le fait que** le couvercle (14) est articulé au corps de récipient (12) de façon à pouvoir basculer de plus de 90°.

18. Récipient selon la revendication 17, **caractérisé par** un dispositif de fixation de couvercle (116; 118) manoeuvrable à la main qui permet de fixer le couvercle dans une position intermédiaire.

19. Récipient selon l'une des revendications 16 à 18, **caractérisé par le fait que** le couvercle (14) est articulé au corps de récipient (12) par un mécanisme d'articulation qui, au début du mouvement d'ouverture du couvercle (14), conduit celui-ci avec une composante de mouvement dirigée sensiblement vers l'extérieur du récipient intérieur (16) et passe au mouvement de basculement seulement après la sortie du couvercle (14) de l'orifice du récipient intérieur (16).

20. Récipient selon la revendication 19, **caractérisé par le fait que** le mécanisme d'articulation est un mécanisme à quatre articulations (46 ; 102 ; 104 ; 110).

21. Récipient selon la revendication 18 et l'une des revendications 19 et 20, **caractérisé par le fait que** le mécanisme d'articulation a une cinématique telle que le couvercle (14), basculé et fixé en position intermédiaire, est, vue de dessus, décalé latéralement du corps de récipient (12).

22. Récipient selon l'une des revendications 19 à 21, **caractérisé par le fait que** sur le mécanisme d'articulation agit un dispositif de précontrainte à ressort (114) qui, au moins pendant la première partie du mouvement d'ouverture du couvercle (14) à partir de sa position fermée, produit une force dirigée dans la direction d'ouverture qui compense au moins en partie le poids du couvercle (14) qui agit dans la direction de fermeture.

23. Récipient selon une ou plusieurs des revendications 1 à 22, **caractérisé par le fait qu'**au moins les parties du récipient (10) qui viennent en contact avec la matière de remplissage de celui-ci sont faites d'un alliage métallique résistant à la corrosion et résistant chimiquement à la matière de remplissage.
